# EUROPEAN PATENT APPLICATION

(11) **EP 4 834 621 A1**
(43) Date of publication of application: **04.11.2026**
(21) Application number: 24912245.8
(22) Date of filing: 04.12.2024
(51) Int. Cl.: B60K 1/04

(54) **WORK VEHICLE**

(30) Priority: 28.12.2023 JP 2023223360
(71) Applicant: KUBOTA CORPORATION, Osaka-shi, Osaka 530-0011 (JP)
(72) Inventor: ITO Daigo, Sakai-shi, Osaka 590-0908 (JP); SASABE Takashi, Sakai-shi, Osaka 590-0908 (JP); KAWABATA Masahiro, Sakai-shi, Osaka 590-0908 (JP); TESHIMA Takeshi, Sakai-shi, Osaka 590-0908 (JP); MAKINO Ryota, Sakai-shi, Osaka 590-0908 (JP)
(74) Representative: Cabinet Beau de Loménie
(86) International application number: PCT/JP2024/042822
(87) International publication number: WO 2025/142355

(57) **Abstract**

Provided is a working vehicle with an improved weight balance of the vehicle.

A working vehicle (1) includes a vehicle body (2), a left traveling assembly (25L) including a left traveling device (3L) located leftward of the vehicle body, a right traveling assembly (25R) including a right traveling device (3R) located rightward of the vehicle body, and a plurality of batteries (7) to store electric power to drive the left traveling assembly and the right traveling assembly. At least one of the plurality of batteries is located in the left traveling assembly or the right traveling assembly.

## Description

### Technical Field

The present invention relates to working vehicles to perform work such as agricultural work.

### Background Art

The working vehicle disclosed in PTL 1 cited below has been known. The working vehicle disclosed in PTL 1 includes a battery, a transmission device, and a machine body frame. The battery is supported by a chassis including the machine body frame and the transmission device.

### Citation List

### Patent Literature

PTL 1: Japanese Unexamined Patent Application Publication No. 2023-66726

### Summary of Invention

### Technical Problem

In the above-mentioned working vehicle, the battery is supported by the chassis, and thus the battery as a heavy object can be firmly supported. However, the weight of the battery is concentrated on the vehicle body (traveling machine body) including the chassis, and thus there is room for improvement in terms of weight balance of the vehicle, including weight reduction and the like of the vehicle body.

The present invention has been made in view of the above-described problem, and an object thereof is to provide working vehicles with an improved weight balance.

### Solution to Problem

A working vehicle according to an example embodiment of the present invention includes a vehicle body, a left traveling assembly including a left traveling device located leftward of the vehicle body, a right traveling assembly including a right traveling device located rightward of the vehicle body, and a plurality of batteries to store electric power to drive the left traveling assembly and the right traveling assembly, wherein at least one of the plurality of batteries is located in the left traveling assembly or the right traveling assembly.

The plurality of batteries may include a first battery to be used during travel or during work and a second battery to be used during travel or during work. The first battery may be located in the vehicle body. The second battery may have a same function as the first battery, and be located in at least one of the left traveling assembly or the right traveling assembly.

The plurality of batteries may include a first battery to be used during travel or during work and a second battery to be used during travel or during work. The first battery and the second battery may have a same function, the first battery may be located in the left traveling assembly, and the second battery may be located in the right traveling assembly.

The plurality of batteries may not be located in the vehicle body.

The second battery may be located in each of the left traveling assembly and the right traveling assembly.

The second battery may be located in at least one of a lower portion of the left traveling assembly or a lower portion of the right traveling assembly.

The second battery may be located in each of a lower portion of the left traveling assembly and a lower portion of the right traveling assembly.

The left traveling assembly may include a left front wheel and a left rear wheel. The right traveling assembly may include a right front wheel and a right rear wheel. The second battery may be located in at least one of a space between the left front wheel and the left rear wheel or a space between the right front wheel and the right rear wheel.

The left traveling assembly may include a left front wheel and a left rear wheel. The right traveling assembly may include a right front wheel and a right rear wheel. The second battery may be located in each of a space between the left front wheel and the left rear wheel and a space between the right front wheel and the right rear wheel.

The working vehicle may further include a lifting mechanism to raise and lower the vehicle body. The lifting mechanism may be configured to raise and lower the first battery with the vehicle body.

The working vehicle may further include a motor to generate power required during travel or during work. The first battery and the second battery may be batteries to store electric power to be supplied to the motor.

### Advantageous Effects of Invention

In the working vehicle according to the present invention, the weight balance of the vehicle can be improved.

### Brief Description of Drawings

[FIG. 1] FIG. 1 is a left side view illustrating an example embodiment of a working vehicle.
[FIG. 2] FIG. 2 is a right side view illustrating the example embodiment of the working vehicle.
[FIG. 3] FIG. 3 is a front view illustrating the example embodiment of the working vehicle.
[FIG. 4] FIG. 4 is a rear view illustrating the example embodiment of the working vehicle.
[FIG. 5] FIG. 5 is a plan view illustrating the example embodiment of the working vehicle.
[FIG. 6] FIG. 6 is a perspective view illustrating the example embodiment of the working vehicle.
[FIG. 7] FIG. 7 is a block diagram illustrating an example of the entire configuration of the working vehicle.
[FIG. 8] FIG. 8 is a perspective view of a frame structure.
[FIG. 9] FIG. 9 is an exploded perspective view of side frames (left frame and right frame).
[FIG. 10] FIG. 10 is a perspective view illustrating an upper frame (lateral frame) and the side frames separately.
[FIG. 11] FIG. 11 is a schematic plan view illustrating the working vehicle with rods of a left cylinder and a right cylinder retracted.
[FIG. 12] FIG. 12 is a plan view illustrating the working vehicle with the rods of the left cylinder and the right cylinder extended.
[FIG. 13] FIG. 13 is a left side view illustrating the working vehicle with a vehicle body raised.
[FIG. 14] FIG. 14 is a front view illustrating the working vehicle with the vehicle body raised.
[FIG. 15] FIG. 15 is a perspective view illustrating the working vehicle with the vehicle body raised.
[FIG. 16] FIG. 16 is a front view illustrating a positional relationship between a first battery and a second battery when the vehicle body is at a first height.
[FIG. 17] FIG. 17 is a front view illustrating an example in which the second battery is located in one of a left traveling assembly and a right traveling assembly, and a piece of equipment different from a battery is located in the other traveling assembly.
[FIG. 18] FIG. 18 is a plan view illustrating a positional relationship between the first battery and the second battery.
[FIG. 19] FIG. 19 is a front view illustrating a positional relationship between the first battery and the second battery when the vehicle body is at a second height.
[FIG. 20] FIG. 20 is a front view illustrating an example embodiment in which no battery is located in the vehicle.

### Description of Embodiments

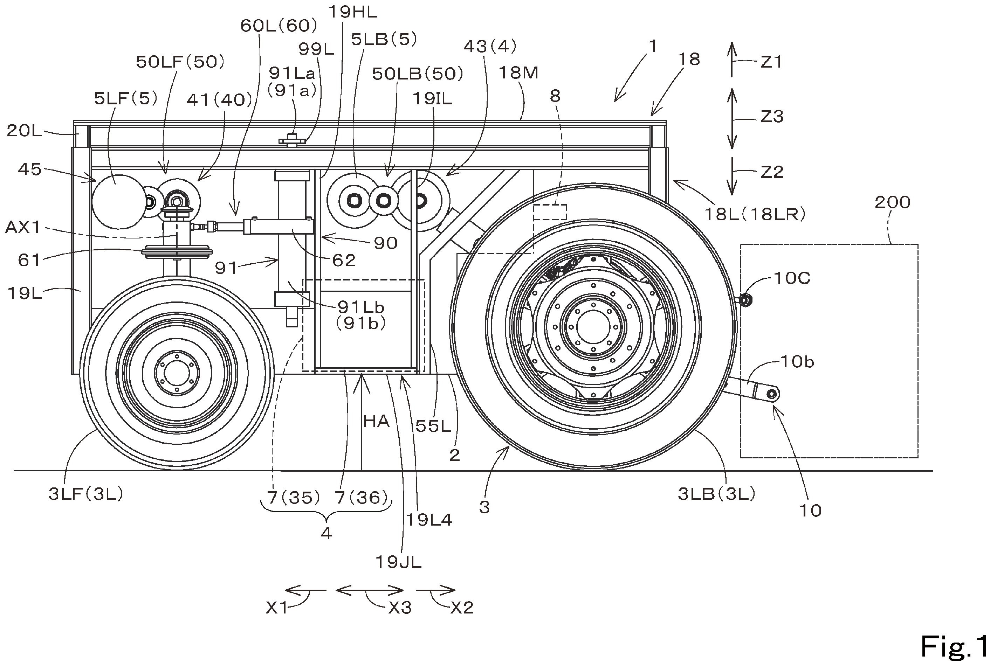

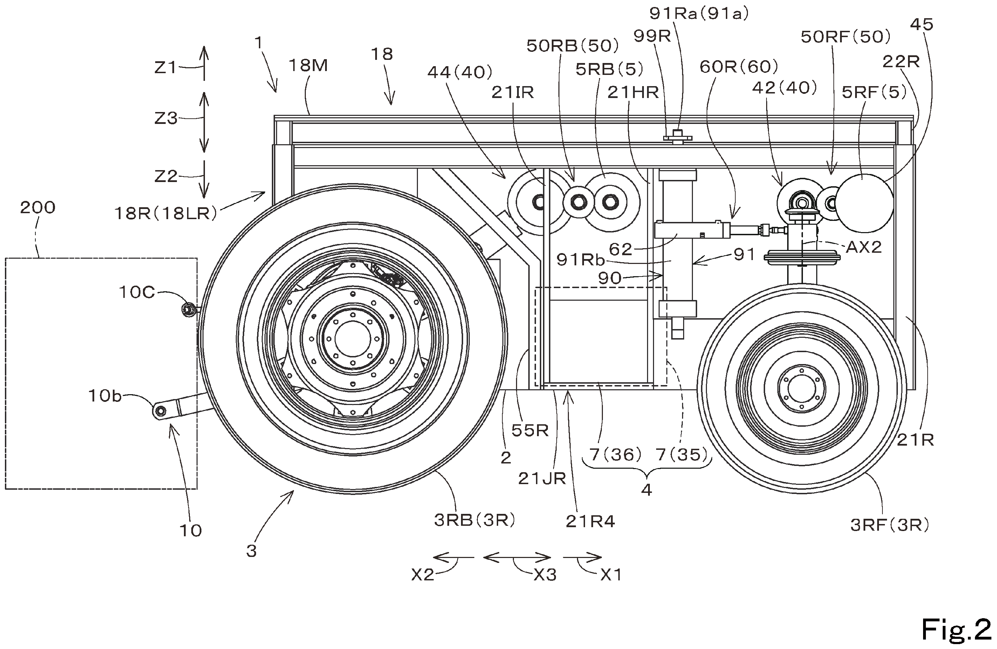

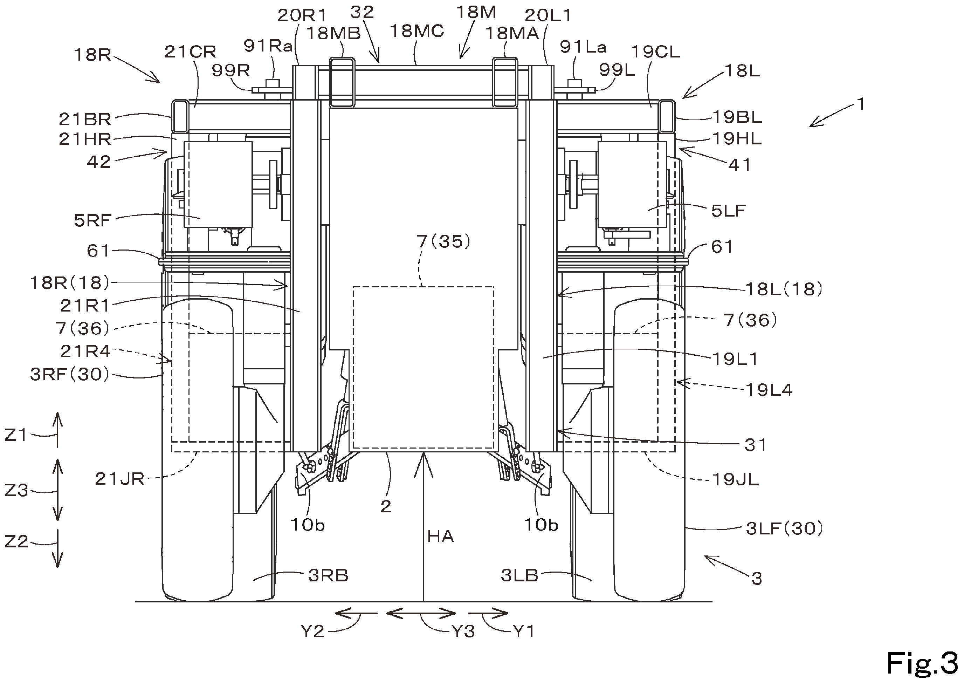

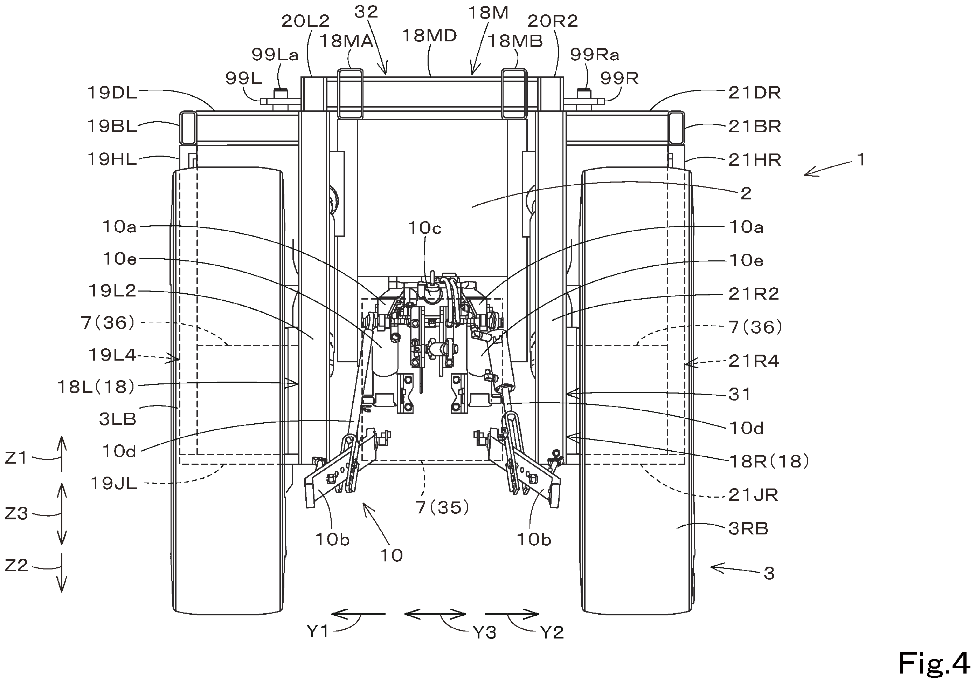

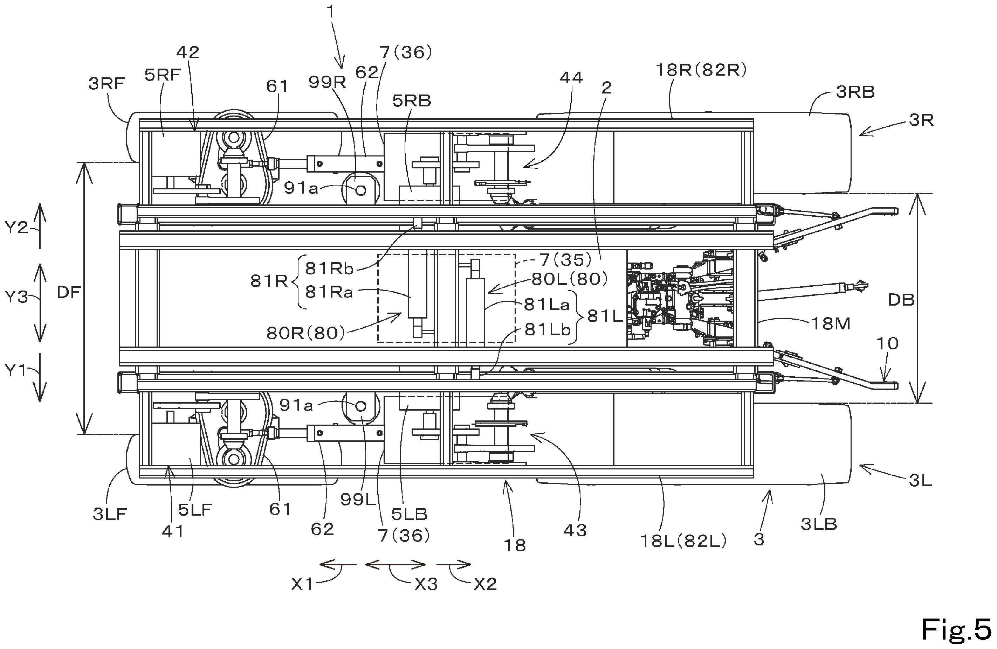

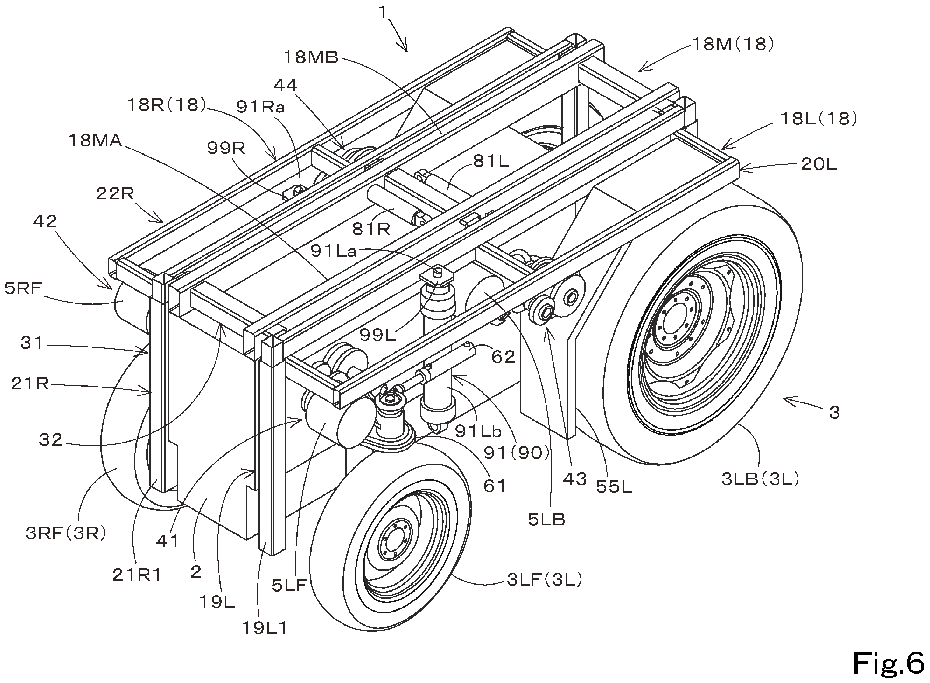

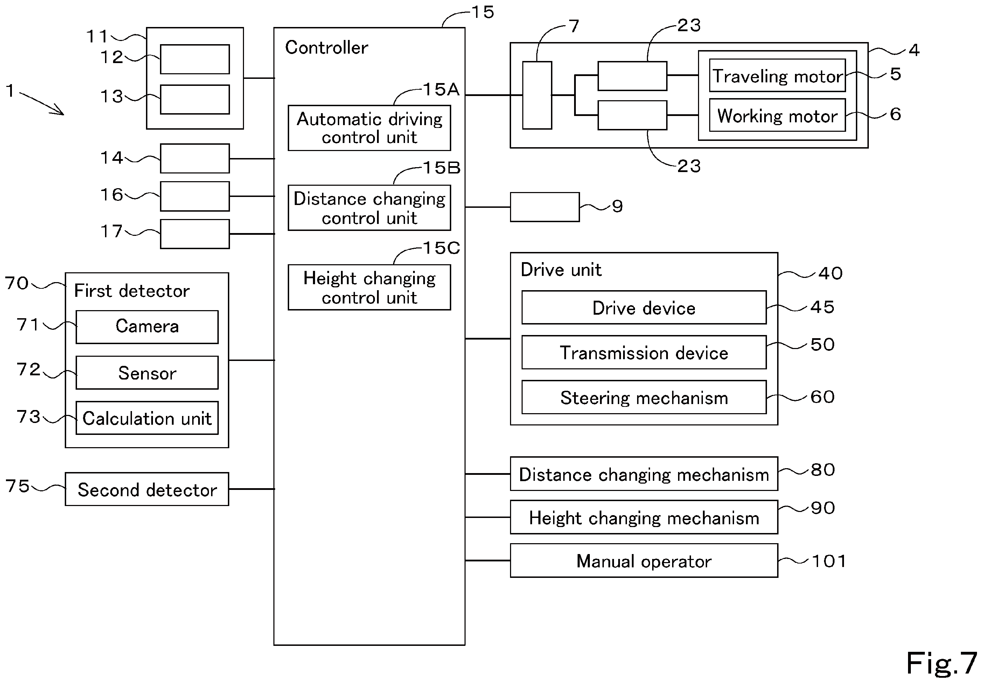

Hereinafter, preferred example embodiments of a working vehicle 1 according to the present invention will be described. FIG. 1 to FIG. 7 illustrate an example embodiment of the working vehicle 1. FIG. 1 is a left side view of the working vehicle 1. FIG. 2 is a right side view of the working vehicle 1. FIG. 3 is a front view of the working vehicle 1. FIG. 4 is a rear view of the working vehicle 1. FIG. 5 is a plan view of the working vehicle 1. FIG. 6 is a perspective view of the working vehicle 1. FIG. 7 is a block diagram illustrating the entire configuration of the working vehicle 1.

In the following description, in the drawings, the direction indicated by an arrow X1 is referred to as forward, the direction indicated by an arrow X2 is referred to as rearward, the direction indicated by an arrow Y1 is referred to as leftward, the direction indicated by an arrow Y2 is referred to as rightward, the direction indicated by an arrow Z1 is referred to as upward, and the direction indicated by an arrow Z2 is referred to as downward. In addition, the direction indicated by an arrow X3 is referred to as the front-rear direction, the direction indicated by an arrow Y3 is referred to as the left-right direction, and the direction indicated by an arrow Z3 is referred to as the up-down direction.

The work performed by the working vehicle 1 includes, e.g., work related to agriculture, work related to industry (such as civil engineering, and architecture), and work related to transportation, but is not limited to these types of work. In the preferred example embodiment of the present invention, the work performed by the working vehicle 1 is work (agricultural work) related to agriculture. Hereinafter, a case will be described as an example where the work performed by the working vehicle 1 is agricultural work. In this case, the working vehicle 1 is an agricultural vehicle.

As illustrated in FIG. 1 to FIG. 6, the working vehicle 1 includes a vehicle body 2, and a traveling device 3 to support the vehicle body 2 such that the vehicle body 2 is allowed to travel. In the case of the present example embodiment, the vehicle body 2 is in a substantially rectangular parallelepiped shape having an internal space. However, the shape of the vehicle body 2 is not limited to a substantially rectangular parallelepiped shape. Various devices and pieces of equipment are housed in the internal space of the vehicle body 2.

As illustrated in FIG. 1 and FIG. 2, a power unit 4 to drive the traveling device 3 is mounted (housed) in the internal space of the vehicle body 2. The power unit 4 generates power to drive the traveling device 3, and the power is supplied to the traveling device 3. As illustrated in FIG. 7, the power unit 4 includes a motor 5 and a battery 7. In the case of the present example embodiment, the battery 7 is mounted (housed) as the power unit 4 in the vehicle body 2.

The working vehicle 1 includes a plurality of batteries 7. The plurality of batteries 7 include a battery 7 (indicated by a dashed line) located in the vehicle body 2, and a battery 7 (indicated by a solid line) located at a position different from the vehicle body 2. The battery 7 located in the vehicle body 2 is an example of the later-described first battery 35. The battery 7 located at a position different from the vehicle body 2 is an example of the later-described second battery 36. The first battery 35 and the second battery 36 will be described in detail below.

The motor 5 is a traveling motor that generates power to drive the traveling device 3. The motor 5 is an electric motor driven by electric power. The motor 5 is connected to an inverter 23 (see FIG. 7). The inverter 23 controls the rotation of the motor 5 based on a control signal from the later-described controller 15. The battery 7 stores the electric power supplied to the motor 5. However, the power unit 4 may include an engine instead of the motor 5. Alternatively, the power unit 4 may include fuel cells.

As illustrated in FIG. 7, the working vehicle 1 includes a motor 6 which is a working motor in addition to the motor 5 which is a traveling motor. The working motor generates power to drive devices and mechanisms which are different from the traveling device 3. The motor 6 is an electric motor to be driven by the electric power supplied from the battery 7. The rotation of the motor 6 can be controlled by the inverter 23. Hereinafter, the motor 5 may be referred to as a "traveling motor 5", and the motor 6 may be referred to as a "working motor 6".

The motor (the traveling motor 5, and the working motor 6) can be mounted on the vehicle body 2. The traveling motor 5 and the working motor 6 can be independently driven from each other. The working motor 6 is a motor to drive a hydraulic pump for actuating the later-described hydraulic cylinder. In addition, the working motor 6 also serves as a motor to drive an external output shaft 8.

The working motor 6 may be a hydraulic motor. The hydraulic motor is driven by a hydraulic fluid supplied from a hydraulic pump. In this case, for example, the hydraulic pump is driven by the traveling motor 5, the hydraulic motor (the working motor 6) is driven by a hydraulic fluid supplied from the hydraulic pump, and the external output shaft is driven by the drive of the hydraulic motor. The working vehicle 1 may include a working motor 6 which is a hydraulic motor in addition to a working motor 6 which is an electric motor.

As described above, the battery 7 which is a portion of the power unit 4 is housed in the vehicle body 2 (see FIG. 1 and FIG. 2). Although not illustrated, the vehicle body 2 further houses: a cooling system (a radiator, a fan, a water pump, a compressor, and the like) that cools the power unit 4 (the motor 5, the motor 6, the battery 7, and the like); and a hydraulic system (a control valve and the like) to actuate the later-described hydraulic cylinders (a cylinder 62, a left cylinder 81L, a right cylinder 81R, and a raising/lowering cylinder 91) and the like based on a control signal from the controller 15.

As illustrated in FIG. 1, the external output shaft 8 projects rearward from the rear of the vehicle body 2. The external output shaft 8 is an output shaft to take the power off from the working motor 6 to the outside of the vehicle body 2. The external output shaft 8 is, e.g., a PTO shaft. The power taken off from the external output shaft 8 is input to a working device (implement) 200 which performs work. Thus, the working device 200 is driven to perform the work.

The working device 200 may be, e.g., a device to perform work (agricultural work) related to agriculture, a device to perform work related to civil engineering, a device to perform work related to architecture, and a device to perform work related to transportation; however, the working device 200 is not limited to these working devices. In the example embodiment shown below, the working device 200 is a device to perform agricultural work.

The working device 200 to perform agricultural work may be , e.g., a spreader to spread a substance to be spread such as fertilizer and agricultural chemicals, a seeder to plant seeds, a cultivator to cultivate the soil, a tiller (plow) to till the soil, a weed remover to remove weeds, and a ridging machine to ridge the soil. However, it is only necessary that the working device 200 be a device that performs agricultural work, and the type thereof is not limited to a specific one. When the working device 200 is an electric working device, the working device 200 may be driven by the electric power taken off from the battery 7 to the outside of the vehicle body 2 through a power line, instead of being driven by the power taken off from the external output shaft 8.

The vehicle body 2 is allowed to travel by driving the traveling device 3. As illustrated in FIG. 3, FIG. 4, and the like, the traveling device 3 includes a left traveling device 3L located leftward of the vehicle body 2 and a right traveling device 3R located rightward of the vehicle body 2. The vehicle body 2 is between the left traveling device 3L and the right traveling device 3R. As illustrated in FIG. 1, the left traveling device 3L includes a left front wheel 3LF and a left rear wheel 3LB. As illustrated in FIG. 2, the right traveling device 3R includes a right front wheel 3RF and a right rear wheel 3RB. Hereinafter, for the purpose of illustration, the left front wheel 3LF, the right front wheel 3RF, the left rear wheel 3LB, and the right rear wheel 3RB may be collectively referred to as the "wheels 30".

The wheels 30 (the left front wheel 3LF, the right front wheel 3RF, the left rear wheel 3LB, and the right rear wheel 3RB) are located sideward of the vehicle body 2. The left front wheel 3LF and the left rear wheel 3LB are located leftward of the vehicle body 2. The right front wheel 3RF and the right rear wheel 3RB are located rightward of the vehicle body 2. In the working vehicle 1 in the present example embodiment, the size (the diameter and width) of the rear wheels (the left rear wheel 3LB and the right rear wheel 3RB) is larger than the size (the diameter and width) of the front wheels (the left front wheel 3LF and the right front wheel 3RF). However, the size of the front wheels (the left front wheel 3LF and the right front wheel 3RF) may be the same as the size of the rear wheels (the left rear wheel 3LB and the right rear wheel 3RB), or the size of the front wheels may be larger than the size of the rear wheels.

In the case of the present example embodiment, the traveling device 3 is a wheel traveling device in which the front wheels (the left front wheel 3LF and the right front wheel 3RF) and the rear wheels (the left rear wheel 3LB and the right rear wheel 3RB) are all tires. However, the traveling device 3 may be a crawler traveling device in which the left traveling device 3L and the right traveling device 3R include crawlers, or the traveling device 3 may be a traveling device in which either the front wheels or the rear wheels are wheels, and the other are crawlers.

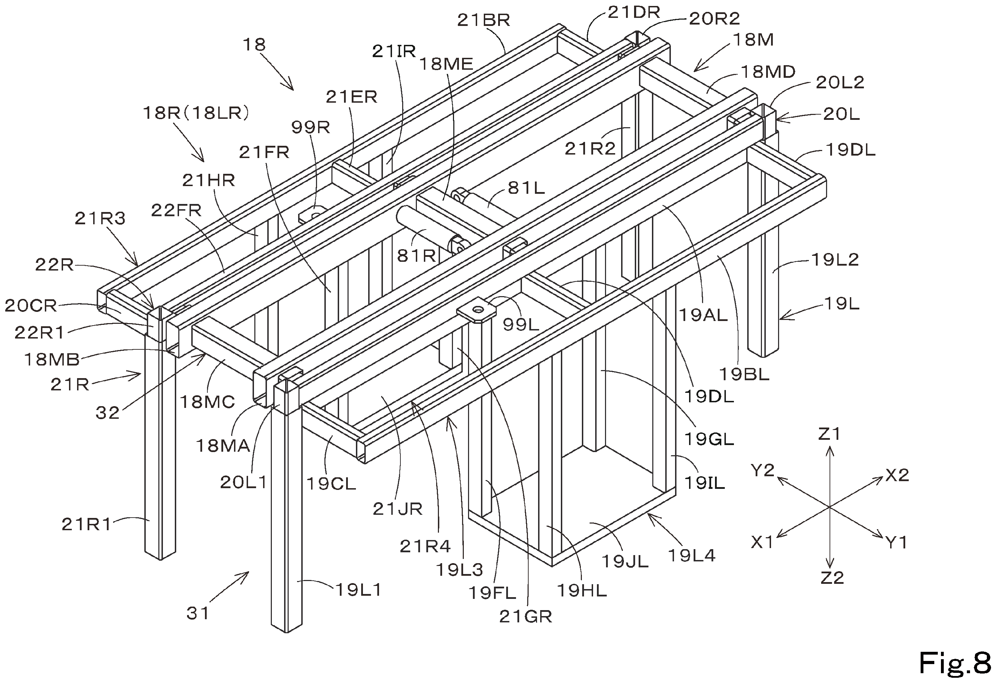

As illustrated in FIG. 1, FIG. 2, and FIG. 6, the working vehicle 1 includes a fender 55L to cover upper and forward areas of the left rear wheel 3LB, and a fender 55R to cover upper and forward areas of the right rear wheel 3RB. The fender 55L is attached to a first connector 19L3 (see FIG. 8) of the later-described frame structure 18. The fender 55R is attached to a first connector 21R3 (see FIG. 8) of the later-described frame structure 18. Although not illustrated, the working vehicle 1 may include fenders to cover respective front wheels (the left front wheel 3LF and the right front wheel 3RF).

As illustrated in FIG. 7, the working vehicle 1 includes a transmission 9. The transmission 9 can change the propelling force of the traveling device 3 by changing speed stages. In addition, the transmission 9 can switch between forward drive and reverse drive of the traveling device 3. The transmission 9 may include a transmission clutch that can switch between a four-wheel drive state (4WD) and a two-wheel drive state (2WD), the four-wheel drive state allowing all four wheels (the left front wheel 3LF, the right front wheel 3RF, the left rear wheel 3LB, and the right rear wheel 3RB) to be driven, and the two-wheel drive state allowing only the rear wheels (the left rear wheel 3LB and the right rear wheel 3RB) or only the front wheels (the left front wheel 3LF and the right front wheel 3RF) to be driven.

As illustrated in FIG. 1, FIG. 2, FIG. 4, and FIG. 5, the working vehicle 1 includes a mount 10 to which the working device 200 to perform the above-mentioned works is attached. The working device 200 is detachably attached to the mount 10. The mount 10 is provided at a rear portion of the vehicle body 2. FIG. 4 is a rear view of the mount 10. However, the mount 10 may be provided at a front portion or a side portion (a left portion or a right portion) of the vehicle body 2.

The mount 10 is built on a three-point linkage mechanism. Specifically, as illustrated in FIG. 4, the mount 10 includes lift arms 10a, lower links 10b, a top link 10c, lift rods 10d, and lift cylinders 10e. The front end of each lift arm 10a is supported on a rear upper portion of the vehicle body 2 such that the front end is swingable upward or downward. The lift arm 10a is swung (raised or lowered) by driving the lift cylinder 10e. Each lift cylinder 10e includes a hydraulic cylinder. Each lift cylinder 10e is connected to a hydraulic pump (not illustrated) via a control valve (not illustrated).

The hydraulic pump is driven by the working motor 6. The control valve is a solenoid valve or the like such that opening and closing of a flow path is controlled by the controller 15. The lift cylinder 10e can be extended and retracted by the control valve controlling the flow of the hydraulic fluid delivered from the hydraulic pump.

The front end of the lower link 10b is supported on a lower rear portion of the vehicle body 2 such that the front end is swingable upward or downward. The front end of the top link 10c is supported on a rear portion of the vehicle body 2, above the lower link 10b such that the front end is swingable upward or downward. Each lift rod 10d connects a lift arm 10a and a corresponding lower link 10b. The working device 200 is connected to a rear portion of the lower link 10b and a rear portion of the top link 10c. When the lift cylinder 10e is driven (extended or retracted), the lift arm 10a is raised or lowered as well as the lower link 10b connected to the lift arm 10a via the lift rod 10d is raised or lowered. Thus, the working device 200 is swung (raised or lowered) upward or downward about a front portion of the lower link 10b, as a fulcrum.

The working device 200 attached to the mount 10 is towed and moved by the working vehicle 1 with travel of the working vehicle 1. Note that instead of the working device 200, a carriage or the like that transports agricultural crops may be attached to the mount 10. The mount 10 may be provided at a portion (for example, a front portion or a side portion) other than a rear portion of the vehicle body 2. The working device 200 may be placed on an upper portion of the working vehicle 1, instead of being attached to the mount 10. In this case, the working device 200 placed on the working vehicle 1 moves with travel of the working vehicle 1.

As illustrated in FIG. 7, the working vehicle 1 includes a position detector 11. The position detector 11 can detect the position (measured position information including the latitude and longitude) of the vehicle body 2 by a satellite positioning system (positioning satellites) such as D-GPS, GPS, GLONASS, BeiDou, Galileo, and Michibiki. That is, the position detector 11 receives satellite signals (such as the positions of the positioning satellites, transmission time, and correction information) transmitted from the positioning satellites, and detects the position (for example, the latitude and longitude) of the vehicle body 2 based on the satellite signals.

The position detector 11 includes a receiver 12 and an inertial measurement unit (IMU) 13. The receiver 12 is a device, including an antenna and the like, to receive the satellite signals transmitted from the positioning satellites, and is attached to the vehicle body 2. The IMU 13 includes an acceleration sensor to detect an acceleration and a gyroscope sensor to detect an angular velocity. The IMU 13 is attached to the vehicle body 2. The IMU 13 can detect the roll angle, pitch angle, yaw angle, and the like of the vehicle body 2. Note that the yaw angle may be detected by installing a plurality of position detectors 11.

As illustrated in FIG. 7, the working vehicle 1 includes a communication device 14. The communication device 14 includes a communication circuit to perform communication through an in-vehicle network and a wireless communication circuit to perform wireless communication. The wireless communication circuit can directly or indirectly communicate with external equipment by IEEE 802.11 series Wi-Fi (Wireless Fidelity, registered trademark) , BLE (Bluetooth (registered trademark) Low Energy), LPWA (Low Power Wide Area), LPWAN (Low-Power Wide-Area Network), or the like, each being a communication standard. As another example, the communication device 14 may be provided with a communication circuit that can wirelessly communicate with external equipment by, e.g., a mobile phone communication network, a data communication network, or the like. The external equipment is, e.g., a personal computer, a smartphone, a tablet computer, a PDA, a server, or the like. The external equipment may include, e.g., the later-described manual operator 101.

As illustrated in FIG. 7, the working vehicle 1 includes the controller 15. The controller 15 performs various controls on the working vehicle 1. The controller 15 includes an arithmetic unit (such as a CPU) and a storage unit (such as a RAM and a ROM). The storage unit may include an external memory provided outside the controller 15. The controller 15 is connected to various devices and mechanisms illustrated in FIG. 7 through an in-vehicle network (in-vehicle LAN) such as a controller area network (CAN), or a communication line.

The controller 15 controls the operation of various devices and mechanisms communicably connected to the controller 15, by the arithmetic unit executing various control programs stored in the storage unit. The function of the later-described control units (an automatic driving control unit 15A, a distance changing control unit 15B, and a height changing control unit 15C) of the controller 15 is implemented by the arithmetic unit executing a predetermined control program stored in the storage unit.

As illustrated in FIG. 7, the controller 15 includes an automatic driving control unit 15A. The automatic driving control unit 15A controls the automatic driving of the working vehicle 1. The automatic driving control unit 15A can perform line automatic driving control and autonomous driving control. In the line automatic driving control, the automatic driving control unit 15A controls the operation of the later-described steering mechanism 60, the transmission 9, the motor 5, and the like such that the working vehicle 1 (vehicle body 2) moves along a preset travel scheduled line.

In the autonomous driving control, the automatic driving control unit 15A sets the travel direction (steering direction) and the vehicle speed (speed) of the vehicle body 2 by using the position detector 11 and the like based on a result of sensing (detection of an object) the area surrounding the working vehicle 1 (vehicle body 2), and controls the operation of the steering mechanism 60, the transmission 9, the motor 5, and the like such that the set steering and vehicle speed are achieved.

Note that the line automatic driving control and the autonomous driving control may be switched by a switch or the like. Alternatively, the automatic driving control unit 15A may be configured to perform either the line automatic driving control or the autonomous driving control. Note that the configuration of the automatic driving control unit 15A is not limited to the one described above.

With the controller 15 including the automatic driving control unit 15A, the working vehicle 1 can perform automatic driving (unmanned driving) without an operator on board. Thus, the working vehicle 1 in the illustrated example embodiment includes no operator's seat on which an operator sits. However, the working vehicle 1 may perform automatic driving with an operator on board. Alternatively, the working vehicle 1 may be driven to travel by an operator on board. When the working vehicle 1 is driven by an operator on board, the vehicle body 2 is provided with an operator's seat.

As illustrated in FIG. 7, the working vehicle 1 includes an illumination device 16. The illumination device 16 is provided in the vehicle body 2. The illumination device 16 includes a headlight that illuminates at least the area forward of the vehicle body 2. In addition to the headlight, the illumination device 16 may include a plurality of work lights that illuminate the area surrounding the vehicle body 2. For example, the work lights can illuminate the areas sideward (leftward and rightward) of the vehicle body 2 and the area rearward of the vehicle body 2. In addition, the illumination device 16 may include a status indicator light, left and right lights, a brake light, and the like.

As illustrated in FIG. 7, the working vehicle 1 includes a notification device 17. The notification device 17 notifies people in the area surrounding the vehicle body 2 of danger (such as approach of the vehicle body 2) by sound, light, or the like. The notification device 17 includes a speaker, a warning light, or the like.

As illustrated in FIG. 1 to FIG. 6, the working vehicle 1 includes a frame structure 18 that is located in the area surrounding the vehicle body 2 and attached to the vehicle body 2. As illustrated in FIG. 8 and the like, the frame structure 18 includes a left frame 18L, a right frame 18R and a lateral frame 18M. As illustrated in FIG. 3, FIG. 6, and the like, the left frame 18L is located leftward of the vehicle body 2. The left frame 18L extends in the up-down direction along the vehicle body 2. The left frame 18L also extends in the front-rear direction along the vehicle body 2. The right frame 18R is located rightward of the vehicle body 2. The right frame 18R extends in the up-down direction along the vehicle body 2. The right frame 18R also extends in the front-rear direction along the vehicle body 2.

The left frame 18L connects the left front wheel 3LF and the left rear wheel 3LB. The right frame 18R connects the right front wheel 3RF and the right rear wheel 3RB. The left frame 18L and the right frame 18R are located sideward of the vehicle body 2. Thus, the left frame 18L and the right frame 18R may be collectively referred to as the "side frames 18LR".

The lateral frame 18M connects the left frame 18L and the right frame 18R. Specifically, the lateral frame 18M connects an upper portion of the left frame 18L and an upper portion of the right frame 18R. The lateral frame 18M is located above the vehicle body.

As illustrated in FIG. 3, the vehicle body 2 is located between the left frame 18L and the right frame 18R in a front view. In other words, the vehicle body 2 is located in an area between the left frame 18L and the right frame 18R. The vehicle body 2 is located below the lateral frame 18M. Thus, the vehicle body 2 is located in the area surrounded by the left frame 18L, the right frame 18R and the lateral frame 18M in a front view.

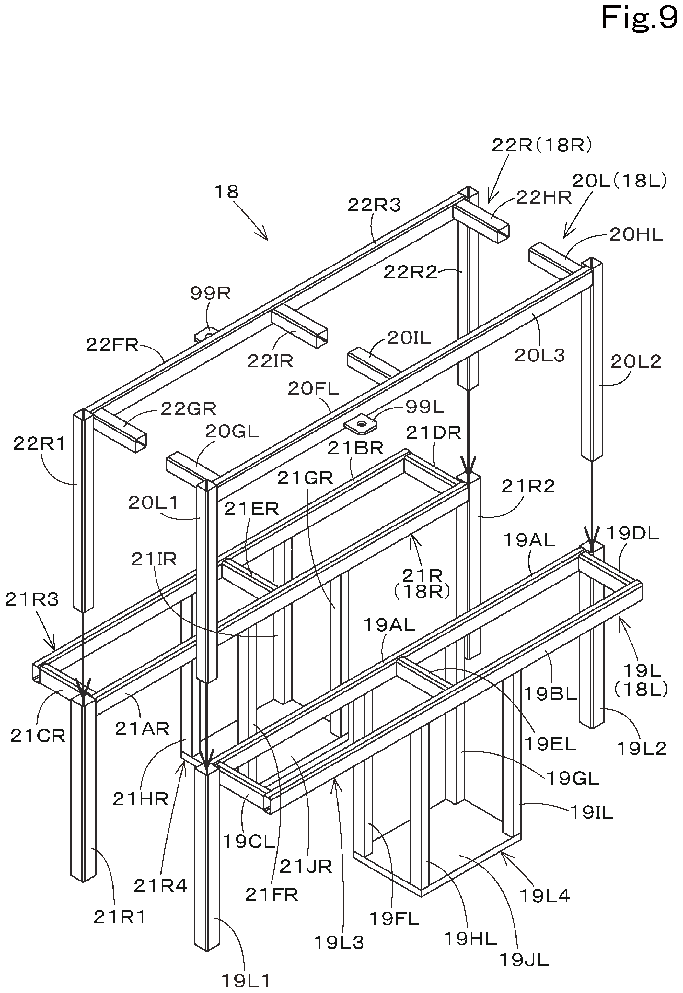

As illustrated in FIG. 9 and the like, the left frame 18L includes a first left frame 19L and a second left frame 20L. The first left frame 19L includes a first front pillar 19L1, a first rear pillar 19L2, and a first connector 19L3. The first front pillar 19L1 and the first rear pillar 19L2 are spaced apart in the front-rear direction, and extend parallel to each other in the up-down direction. As illustrated in FIG. 3 and FIG. 6, the first front pillar 19L1 is located leftward of the front of the vehicle body 2. As illustrated in FIG. 4, the first rear pillar 19L2 is located leftward of the rear of the vehicle body 2. The first front pillar 19L1 and the first rear pillar 19L2 are in a cylindrical (square cylindrical) shape.

As illustrated in FIG. 9, the first connector 19L3 connects the first front pillar 19L1 and the first rear pillar 19L2. The first connector 19L3 includes a frame member 19AL, a frame member 19BL, a frame member 19CL, a frame member 19DL, and a frame member 19EL. The frame member 19AL extends in the front-rear direction, and connects an upper portion of the first front pillar 19L1 and an upper portion of the first rear pillar 19L2. The frame member 19BL extends in the front-rear direction on the left side of the frame member 19AL. The frame member 19CL connects a front portion of the frame member 19AL and a front portion of the frame member 19BL. The frame member 19DL connects a rear portion of the frame member 19AL and a rear portion of the frame member 19BL. The frame member 19EL connects a middle portion of the frame member 19AL in the front-rear direction and a middle portion of the frame member 19BL in the front-rear direction.

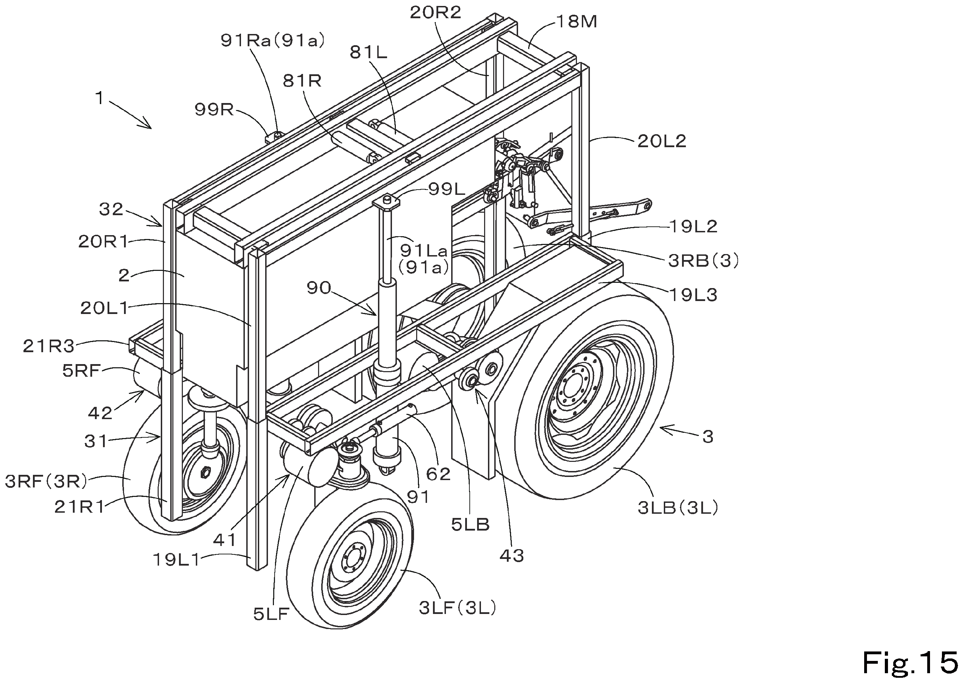

As illustrated in FIG. 8, FIG. 9, and FIG. 10, the first left frame 19L includes a left equipment supporter 19L4. The left equipment supporter 19L4 supports (see FIG. 1, FIG. 16, and FIG. 20) the later-described battery (the second battery 36 or the first battery 35). Note that in some of the drawings (such as FIG. 6 and FIG. 15), the left equipment supporter 19L4 and the battery supported by the left equipment supporter 19L4 are omitted.

The left equipment supporter 19L4 is connected to the first connector 19L3. The left equipment supporter 19L4 includes a first vertical member 19FL, a second vertical member 19GL, a third vertical member 19HL, a fourth vertical member 19IL, and a support plate 19JL. The first vertical member 19FL, the second vertical member 19GL, the third vertical member 19HL, and the fourth vertical member 19IL are spaced apart from each other and extend parallel to each other in the up-down direction.

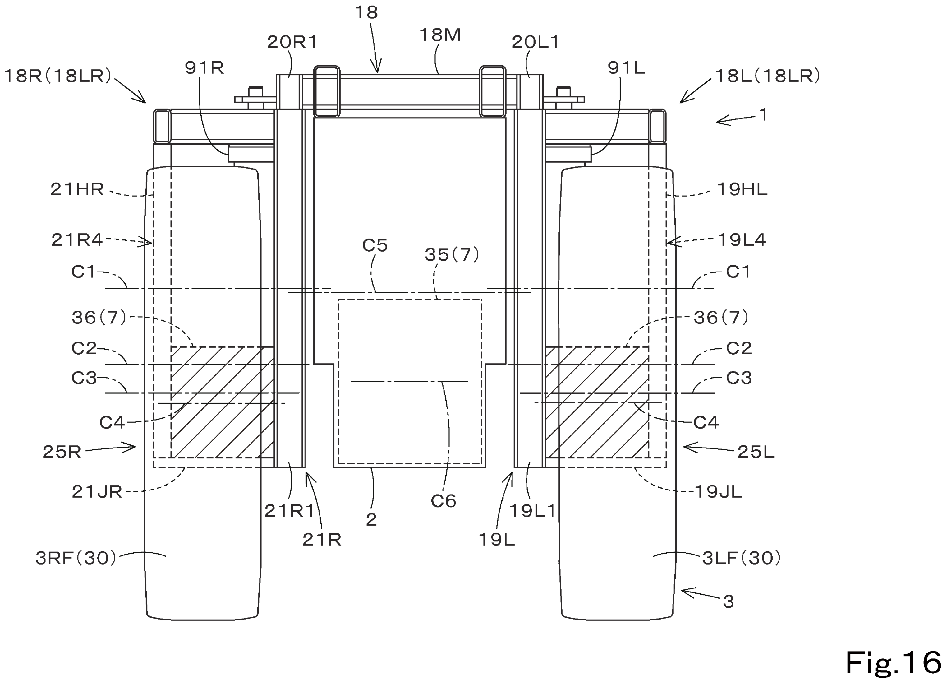

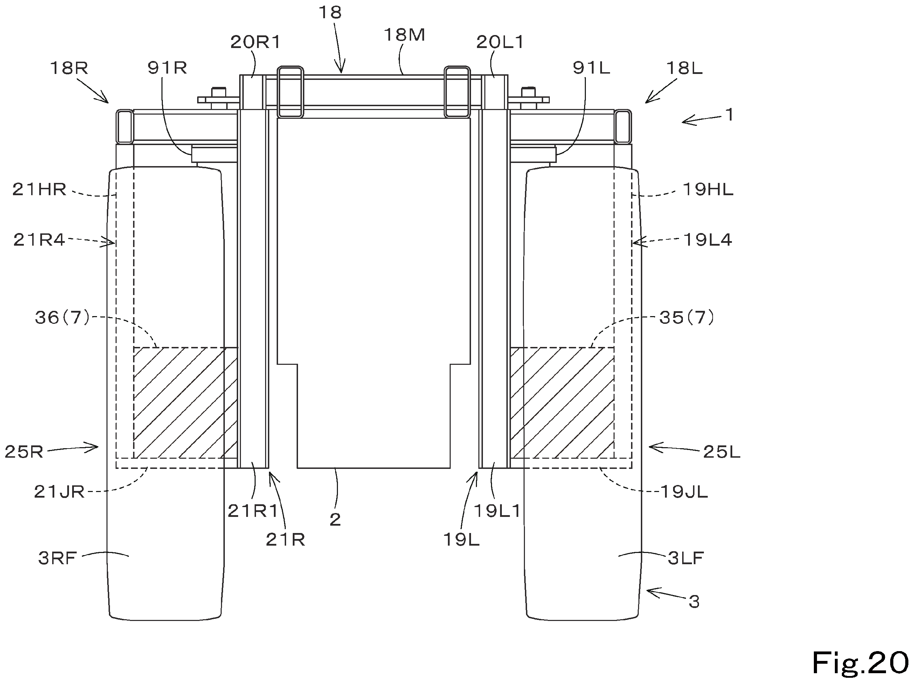

The first vertical member 19FL and the second vertical member 19GL are connected to the frame member 19AL at upper portions, and extend downward. The third vertical member 19HL and the fourth vertical member 19IL are connected to the frame member 19BL at upper portions, and extend downward. The support plate 19JL is connected to lower portions of the first vertical member 19FL, the second vertical member 19GL, the third vertical member 19HL, and the fourth vertical member 19IL such that the upper surface of the support plate 19JL is horizontal. The later-described battery (the second battery 36 or the first battery 35) is placed and supported on the upper surface of the support plate 19JL (see FIG. 16 and FIG. 20). Thus, the battery is supported by the left equipment supporter 19L4.

As illustrated in FIG. 9, the second left frame 20L includes a second front pillar 20L1, a second rear pillar 20L2, and a second connector 20L3. The second front pillar 20L1 and the second rear pillar 20L2 are spaced apart in the front-rear direction, and extend parallel to each other in the up-down direction. The second connector 20L3 connects the second front pillar 20L1 and the second rear pillar 20L2. The second connector 20L3 includes a frame member 20FL, a frame member 20GL, a frame member 20HL, and a frame member 20IL. The frame member 20FL extends in the front-rear direction, and connects an upper portion of the second front pillar 20L1 and an upper portion of the second rear pillar 20L2. The frame member 20GL extends rightward from a front portion of the right surface of the frame member 20FL. The frame member 20HL extends rightward from a rear portion of the right surface of the frame member 20FL. The frame member 20IL extends rightward from a middle portion of the right surface of the frame member 20FL in the front-rear direction.

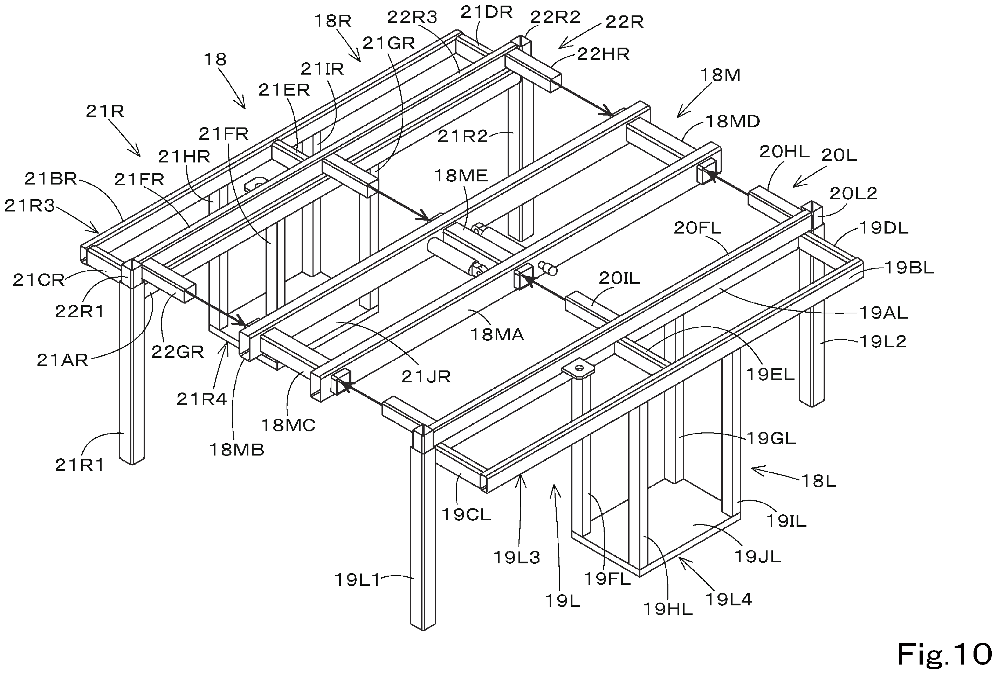

As indicated by a downward arrow in FIG. 9, the second front pillar 20L1 is inserted into the inside of the cylindrical first front pillar 19L1 from above. The second rear pillar 20L2 is inserted into the inside of the cylindrical first rear pillar 19L2 from above. Thus, the first left frame 19L and the second left frame 20L are combined (see FIG. 10). The second front pillar 20L1 can be moved in the up-down direction along the first front pillar 19L1. The second rear pillar 20L2 can be moved in the up-down direction along the first rear pillar 19L2. Thus, the second left frame 20L can be moved in the up-down direction with respect to the first left frame 19L.

As illustrated in FIG. 9, the right frame 18R includes a first right frame 21R and a second right frame 22R. The first right frame 21R includes a first front pillar 21R1, a first rear pillar 21R2, and a first connector 21R3. The first front pillar 21R1 and the first rear pillar 21R2 are spaced apart in the front-rear direction, and extend parallel to each other in the up-down direction. As illustrated in FIG. 3 and FIG. 6, the first front pillar 21R1 is located rightward of the front of the vehicle body 2. As illustrated in FIG. 4, the first rear pillar 21R2 is located rightward of the rear of the vehicle body 2. The first front pillar 21R1 and the first rear pillar 21R2 are in a cylindrical (square cylindrical) shape.

The first connector 21R3 connects the first front pillar 21R1 and the first rear pillar 21R2. The first connector 21R3 includes a frame member 21AR, a frame member 21BR, a frame member 21CR, a frame member 21DR, and a frame member 21ER. The frame member 21AR extends in the front-rear direction, and connects an upper portion of the first front pillar 21R1 and an upper portion of the first rear pillar 21R2. The frame member 21BR extends in the front-rear direction on the right side of the frame member 21AR. The frame member 21CR connects a front portion of the frame member 21AR and a front portion of the frame member 21BR. The frame member 21DR connects a rear portion of the frame member 21AR and a rear portion of the frame member 21BR. The frame member 21ER connects a middle portion of the frame member 21AR in the front-rear direction and a middle portion of the frame member 21BR in the front-rear direction.

As illustrated in FIG. 8, FIG. 9, and FIG. 10, the first right frame 21R includes a right equipment supporter 21R4. The right equipment supporter 21R4 supports (see FIG. 2, FIG. 16, and FIG. 20) the later-described battery (the second battery 36). Note that in some of the drawings (such as FIG. 6 and FIG. 15), the right equipment supporter 21R4 and the battery supported by the right equipment supporter 21R4 are omitted.

The right equipment supporter 21R4 is connected to the first connector 21R3. The right equipment supporter 21R4 includes a first vertical member 21FR, a second vertical member 21GR, a third vertical member 21HR, a fourth vertical member 21IR, and a support plate 21JR. The first vertical member 21FR, the second vertical member 21GR, the third vertical member 21HR, and the fourth vertical member 21IR are spaced apart from each other and extend parallel to each other in the up-down direction.

The first vertical member 21FR and the second vertical member 21GR are connected to the frame member 21AR at upper portions, and extend downward. The third vertical member 21HR and the fourth vertical member 21IR are connected to the frame member 21BR at upper portions, and extend downward. The support plate 21JR is connected to lower portions of the first vertical member 21FR, the second vertical member 21GR, the third vertical member 21HR, and the fourth vertical member 21IR such that the upper surface of the support plate 21JR is horizontal. The later-described second battery 36 is placed and supported on the upper surface of the support plate 21JR (see FIG. 16 and FIG. 20). Thus, the second battery 36 is supported by the right equipment supporter 21R4.

The second right frame 22R includes a second front pillar 22R1, a second rear pillar 22R2, and a second connector 22R3. The second front pillar 22R1 and the second rear pillar 22R2 are spaced apart in the front-rear direction, and extend parallel to each other in the up-down direction. The second connector 22R3 connects the second front pillar 22R1 and the second rear pillar 22R2. The second connector 22R3 includes a frame member 22FR, a frame member 22GR, a frame member 22HR, and a frame member 22IR. The frame member 22FR extends in the front-rear direction, and connects an upper portion of the second front pillar 22R1 and an upper portion of the second rear pillar 22R2. The frame member 22GR extends leftward from a front portion of the left surface of the frame member 22FR. The frame member 22HR extends leftward from a rear portion of the left surface of the frame member 22FR. The frame member 22IR extends leftward from a middle portion of the left surface of the frame member 22FR in the front-rear direction.

As indicated by a downward arrow in FIG. 9, the second front pillar 22R1 is inserted into the inside of the cylindrical first front pillar 21R1 from above. The second rear pillar 22R2 is inserted into the inside of the cylindrical first rear pillar 21R2 from above. Thus, the first right frame 21R and the second right frame 22R are combined (see FIG. 10). The second front pillar 22R1 can be moved in the up-down direction along the first front pillar 21R1. The second rear pillar 22R2 can be moved in the up-down direction along the first rear pillar 21R2. Thus, the second right frame 22R can be moved in the up-down direction with respect to the first right frame 21R.

As illustrated in FIG. 10, the lateral frame 18M includes a frame member 18MA, a frame member 18MB, a frame member 18MC, a frame member 18MD, and a frame member 18ME. The frame member 18MA is located in a left portion of the lateral frame 18M, and extends in the front-rear direction. The frame member 18MB is located in a right portion of the lateral frame 18M, and extends in the front-rear direction. The frame member 18MA and the frame member 18MB are spaced apart in the left-right direction, and located parallel to each other.

The frame member 18MC, the frame member 18MD, and the frame member 18ME are parallel to each other, and extend in the left-right direction. The frame member 18MC connects a front portion of the frame member 18MA and a front portion of the frame member 18MB. The frame member 18MD connects a rear portion of the frame member 18MA and a rear portion of the frame member 18MB. The frame member 18ME connects a middle portion of the frame member 18MA in the front-rear direction and a middle portion of the frame member 18MB in the front-rear direction.

The frame member 18MC, the frame member 18MD and the frame member 18ME are in a cylindrical (square cylindrical) shape. As indicated by an arrow in FIG. 10, into the frame member 18MC, the frame member 20GL is inserted from the left, and the frame member 22GR is inserted from the right. Into the frame member 18MD, the frame member 20HL is inserted from the left, and the frame member 22HR is inserted from the right. Into the frame member 18ME, the frame member 20IL is inserted from the left, and the frame member 22IR is inserted from the right. Thus, the lateral frame 18M, the second left frame 20L and the second right frame 22R are combined (see FIG. 10).

The frame member 20GL inserted into the frame member 18MC from the left can be moved in the left-right direction along the frame member 18MC. The frame member 20HL inserted into the frame member 18MD from the left can be moved in the left-right direction along the frame member 18MD. The frame member 20IL inserted into the frame member 18ME from the left can be moved in the left-right direction along the frame member 18ME. Thus, the left frame 18L can be moved in the left-right direction with respect to the lateral frame 18M on the left side of the lateral frame 18M.

The frame member 22GR inserted into the frame member 18MC from the right can be moved in the left-right direction along the frame member 18MC. The frame member 22HR inserted into the frame member 18MD from the right can be moved in the left-right direction along the frame member 18MD. The frame member 22IR inserted into the frame member 18ME from the right can be moved in the left-right direction along the frame member 18ME. Thus, the right frame 18R can be moved in the left-right direction with respect to the lateral frame 18M on the right side of the lateral frame 18M.

As described above, the second left frame 20L can be moved in the up-down direction with respect to the first left frame 19L. Also, the second right frame 22R can be moved in the up-down direction with respect to the first right frame 21R. Thus, the lateral frame 18M (the later-described movable frame 32) combined with the second left frame 20L and the second right frame 22R can be moved in the up-down direction with respect to the first left frame 19L and the first right frame 21R (the later-described fixed frame 31).

As illustrated in FIG. 3, FIG. 4, and FIG. 6, the vehicle body 2 is fixed to a lower portion of the lateral frame 18M. Specifically, the vehicle body 2 is fixed to lower portions of the frame member 18MA and the frame member 18MB. Thus, the vehicle body 2 can be moved integrally with the lateral frame 18M. Thus, when the lateral frame 18M is moved in the up-down direction with respect to the first left frame 19L and the first right frame 21R, the vehicle body 2 is moved in the up-down direction with the lateral frame 18M.

The frame structure 18 includes a fixed frame 31 to which the traveling device 3 is attached, and a movable frame 32 attached to the vehicle body 2. In the frame structure 18, the second left frame 20L, the second right frame 22R, and the lateral frame 18M are each a movable frame 32 which can be moved in the up-down direction. The first left frame 19L and the first right frame 21R are each a fixed frame 31 which is not moved in the up-down direction. The vehicle body 2 is moved, i.e., raised or lowered with the movable frame 32 in the up-down direction with respect to the fixed frame 31.

The later-described height changing mechanism 90 changes the height of the vehicle body 2 from the ground surface by raising or lowering the movable frame 32 with respect to the fixed frame 31. The traveling device 3 is attached to the fixed frame 31. Specifically, the left traveling device 3L is attached to the first left frame 19L. The right traveling device 3R is attached to the first right frame 21R. When the movable frame 32 is raised or lowered with respect to the fixed frame 31, the vehicle body 2 is raised or lowered with respect to the traveling device 3.

The left traveling device 3L is attached to the first left frame 19L. The right traveling device 3R is attached to the first right frame 21R. Hereinafter, the first left frame 19L to which the left traveling device 3L is attached is referred to as a "left traveling assembly 25L", and the first right frame 21R to which the right traveling device 3R is attached is referred to as a "right traveling assembly 25R". The left traveling assembly 25L includes the left traveling device 3L and the first left frame 19L. The right traveling assembly 25R includes the right traveling device 3R and the first right frame 21R.

Thus, the working vehicle 1 includes the left traveling assembly 25L including the left traveling device 3L located leftward of the vehicle body 2, and the right traveling assembly 25R including the right traveling device 3R located rightward of the vehicle body 2. The left traveling assembly 25L includes the left front wheel 3LF and the left rear wheel 3LB. The right traveling assembly 25R includes the right front wheel 3RF and the right rear wheel 3RB. When the movable frame 32 is raised or lowered with respect to the fixed frame 31, the vehicle body 2 is raised or lowered with respect to the left traveling assembly 25L and the right traveling assembly 25R.

As described above, the left frame 18L and the right frame 18R can be moved in the left-right direction with respect to the lateral frame 18M. Since the vehicle body 2 is fixed to the lateral frame 18M, the left frame 18L and the right frame 18R can be moved in the left-right direction with respect to the vehicle body 2. Specifically, the left frame 18L can be moved in a direction (leftward) away from the vehicle body 2 and a direction (rightward) closer to the vehicle body 2. The right frame 18R can be moved in a direction (rightward) away from the vehicle body 2 and a direction (leftward) closer to the vehicle body 2.

Since the left traveling device 3L is attached to the left frame 18L (the first left frame 19L), the left traveling device 3L can also be moved in the left-right direction with the movement of the left frame 18L in the left-right direction. Since the right traveling device 3R is attached to the right frame 18R (the first right frame 21R), the right traveling device 3R can also be moved in the left-right direction with the movement of the right frame 18R in the left-right direction. Thus, the left traveling assembly 25L and the right traveling assembly 25R can be moved in the left-right direction.

As illustrated in FIG. 7, the working vehicle 1 includes a drive unit 40 to drive the wheels (the left front wheel 3LF, the right front wheel 3RF, the left rear wheel 3LB, and the right rear wheel 3RB). The drive unit 40 includes: a drive device 45 to generate power; a transmission mechanism 50 to transmit the power generated by the drive device 45 to the wheels 30; and a steering mechanism 60 to change the direction of the wheels (the left front wheel 3LF and the right front wheel 3RF). In the case of the present example embodiment, the steering mechanism 60 is a mechanism to change the direction of the front wheels (the left front wheel 3LF and the right front wheel 3RF), but may be a mechanism to change the direction of the rear wheels (the left rear wheel 3LB and the right rear wheel 3RB). The steering mechanism 60 may be a mechanism to change both the direction of the front wheels and the direction of the rear wheels. The steering mechanism 60 may be a mechanism to change the directions of the left front wheel 3LF, the right front wheel 3RF, the left rear wheel 3LB, and the right rear wheel 3RB independently.

As illustrated in FIG. 1 and FIG. 2, the drive unit 40 includes a first drive unit 41 to drive the left front wheel 3LF, a second drive unit 42 to drive the right front wheel 3RF, a third drive unit 43 to drive the left rear wheel 3LB, and a fourth drive unit 44 to drive the right rear wheel 3RB. The first drive unit 41, the second drive unit 42, the third drive unit 43 and the fourth drive unit 44 each include the later-described drive device 45 and transmission mechanism 50. The first drive unit 41 and the second drive unit 42 each include the later-described steering mechanism 60. The drive units are attached to the frame structure 18.

In the case of the present example embodiment, the drive device 45 is a motor. Specifically, the drive device 45 is the traveling motor 5 described above. In other words, the motor included in the drive device 45 is the same as the motor included in the above-described power unit 4. As described below, the motors 5 included in the drive device 45 of the drive unit 40 include a motor 5LF, a motor 5RF, a motor 5LB and a motor 5RB.

As illustrated in FIG. 1, the first drive unit 41 includes the motor 5LF, and a transmission mechanism 50LF to transmit the power of the motor 5LF to the left front wheel 3LF. The transmission mechanism 50LF includes a gear mechanism, including a plurality of gears, and the like. When the first drive unit 41 drives the motor 5LF, the power of the motor 5LF is transmitted to the left front wheel 3LF through the transmission mechanism 50LF.

As illustrated in FIG. 2, the second drive unit 42 includes the motor 5RF, and a transmission mechanism 50RF to transmit the power of the motor 5RF to the right front wheel 3RF. The transmission mechanism 50RF includes a gear mechanism, including a plurality of gears, and the like. When the second drive unit 42 drives the motor 5RF, the power of the motor 5RF is transmitted to the right front wheel 3RF through the transmission mechanism 50RF.

As illustrated in FIG. 1, the third drive unit 43 includes the motor 5LB, and a transmission mechanism 50LB to transmit the power of the motor 5LB to the left rear wheel 3LB. The transmission mechanism 50LB includes a gear mechanism, including a plurality of gears, and the like. When the third drive unit 43 drives the motor 5LB, the power of the motor 5LB is transmitted to the left rear wheel 3LB through the transmission mechanism 50LB.

As illustrated in FIG. 2, the fourth drive unit 44 includes the motor 5RB, and a transmission mechanism 50RB to transmit the power of the motor 5RB to the right rear wheel 3RB. The transmission mechanism 50RB includes a gear mechanism, including a plurality of gears, and the like. When the fourth drive unit 44 drives the motor 5RB, the power of the motor 5RB is transmitted to the right rear wheel 3RB through the transmission mechanism 50RB.

As illustrated in FIG. 7, the drive unit 40 includes the steering mechanism 60 to change the direction of the wheels 30. In the case of the present example embodiment, the steering mechanism 60 changes the direction of the front wheels (the left front wheel 3LF and the right front wheel 3RF) among the wheels 30. As illustrated in FIG. 1 and FIG. 2, the steering mechanism 60 includes a left steering mechanism 60L to change the direction of the left front wheel 3LF, and a right steering mechanism 60R to change the direction of the right front wheel 3RF.

As illustrated in FIG. 1, the first drive unit 41 includes the left steering mechanism 60L. As illustrated in FIG. 2, the second drive unit 42 includes the right steering mechanism 60R. The left steering mechanism 60L can rotate the left front wheel 3LF about an axis AX1 by extending or retracting a rod 62a by driving a cylinder 62. Similarly, the right steering mechanism 60R can rotate the right front wheel 3RF about an axis AX2 by extending or retracting the rod 62a by driving the cylinder 62. In this manner, the travel direction of a traveling machine body 100 can be changed by changing the direction of the left front wheel 3LF and the right front wheel 3RF by driving the steering mechanism 60.

The left traveling assembly 25L includes the first drive unit 41 and the third drive unit 43. Thus, the left traveling assembly 25L includes the motor 5LF and the transmission mechanism 50LF, the motor 5LB and the transmission mechanism 50LB, and the left steering mechanism 60L. The right traveling assembly 25R includes the second drive unit 42 and the fourth drive unit 44. Thus, the right traveling assembly 25R includes the motor 5RF and the transmission mechanism 50RF, the motor 5RB and the transmission mechanism 50RB, and the right steering mechanism 60R.

Note that as a different example embodiment of the drive device 45, the motor in the drive device 45 may be an in-wheel motor. In this case, all the left front wheel 3LF, the right front wheel 3RF, the left rear wheel 3LB, and the right rear wheel 3RB may be driven by an in-wheel motor, or some of them (for example, the left front wheel 3LF and the right front wheel 3RF, or the left rear wheel 3LB and the right rear wheel 3RB) may be driven by an in-wheel motor.

As illustrated in FIG. 7, the working vehicle 1 includes a first detector 70. The first detector 70 detects the conditions of the area surrounding the vehicle body 2. As the conditions of the area surrounding the vehicle body 2, the first detector 70 detects, e.g., the width of a travelable road. The width of a travelable road detected by the first detector 70 is the width of an object located between the left traveling device 3L and the right traveling device 3R of the working vehicle 1 while traveling. The first detector 70 detects, as the width of a travelable road, e.g., the width of a ridge on the ground surface, and the width of an obstacle on the ground surface that blocks the path of travel. The obstacles that block the travel path include, e.g., a groove and a hole in the ground, a crop planted in the ground, and an obstacle (for example, a stone and an artificial structure) on the ground surface.

As illustrated in FIG. 7, the first detector 70 includes a camera (image pickup device) 71, a sensor 72, and a calculation unit 73. In the case of the present example embodiment, the first detector 70 includes both the camera 71 and the sensor 72, but may include only one of them.

The camera 71 is a charge coupled device (CCD) camera equipped with a CCD image sensor, or a complementary metal oxide semiconductor (CMOS) camera equipped with a CMOS image sensor. The camera 71 is mounted on the vehicle body 2 to capture an image of the area surrounding the vehicle body 2. It is only necessary for the camera 71 to capture an image of an area in one or more directions including at least the travel direction of the vehicle body 2 among the forward, rearward, leftward, and rightward directions of the vehicle body 2. Preferably, the camera 71 is provided to capture images of areas in the forward, rearward, and sideward (leftward and rightward) directions of the vehicle body 2. The camera 71 may be provided such that the camera 71 can capture an image of an area in a direction (e.g., right forward, left forward, front downward, or rear downward) other than the forward, rearward, and sideward (leftward and rightward) directions of the vehicle body 2.

The camera 71 captures an image of the area surrounding the vehicle body 2 to generate an image signal. The calculation unit 73 includes a computer, including a signal processing circuit to process the generated image signal, and the like. The signal processing circuit detects the state (such as the presence or absence of an object, the position of an object, the type of an object, and the size of an object) of an object based on the image signal output from the camera 71. The object includes the above-mentioned ridge and obstacle.

The sensor 72 is an optical sensor, and uses, e.g., light detection and ranging (LiDAR). The sensor 72 may be an ultrasonic sensor. The ultrasonic sensor is, e.g., an airborne ultrasonic sensor such as a sonar. The sensor 72 preferably includes both an optical sensor and an ultrasonic sensor, but may include either one of the sensors.

The above-described sensor 72 is mounted on the vehicle body 2 to detect an object in the area surrounding the vehicle body 2. It is only necessary for the sensor 72 to detect an object in at least one or more directions including the travel direction of the vehicle body 2 among the forward, rearward, leftward, and rightward directions of the vehicle body 2. Preferably, the sensor 72 is provided to detect objects forward, rearward, and sideward (leftward and rightward) of the vehicle body 2. The sensor 72 may be provided such that the sensor 72 can detect an object in a direction (e.g., right forward, left forward, front downward, or rear downward) other than the forward, rearward, and sideward (leftward and rightward) directions of the vehicle body 2.

As illustrated in FIG. 7, the working vehicle 1 includes a second detector 75. The second detector 75 detects the distance between the left traveling device 3L and the right traveling device 3R. Hereinafter, the second detector 75 may be referred to as the "distance detector". As the second detector (distance detector) 75, for example, the above-mentioned optical sensor and ultrasonic sensor may be used.

The distance between the left traveling device 3L and the right traveling device 3R detected by the second detector 75 is the distance between the inner surface of the left traveling device 3L and the inner surface of the right traveling device 3R. Specifically, the distance is the smaller one of the distance between the inner surface of the left front wheel 3LF and the inner surface of the right front wheel 3RF and the distance between the inner surface of the left rear wheel 3LB and the inner surface of the right rear wheel 3RB.

For example, as illustrated in FIG. 5, when the distance DB between the inner surface of the left rear wheel 3LB and the inner surface of the right rear wheel 3RB is smaller than the distance DF between the inner surface of the left front wheel 3LF and the inner surface of the right front wheel 3RF (DB < DF), the second detector 75 detects, as the distance between the left traveling device 3L and the right traveling device 3R, the distance DB between the inner surface of the left rear wheel 3LB and the inner surface of the right rear wheel 3RB. When the distance DF between the inner surface of the left front wheel 3LF and the inner surface of the right front wheel 3RF is the same as the distance DB between the inner surface of the left rear wheel 3LB and the inner surface of the right rear wheel 3RB (DB = DF), the second detector 75 detects, as the distance between the left traveling device 3L and the right traveling device 3R, either the distance DF or the distance DB. When the distance DF between the inner surface of the left front wheel 3LF and the inner surface of the right front wheel 3RF is smaller than the distance DB between the inner surface of the left rear wheel 3LB and the inner surface of the right rear wheel 3RB (DB > DF), the second detector 75 detects, as the distance between the left traveling device 3L and the right traveling device 3R, the distance DF between the inner surface of the left front wheel 3LF and the inner surface of the right front wheel 3RF.

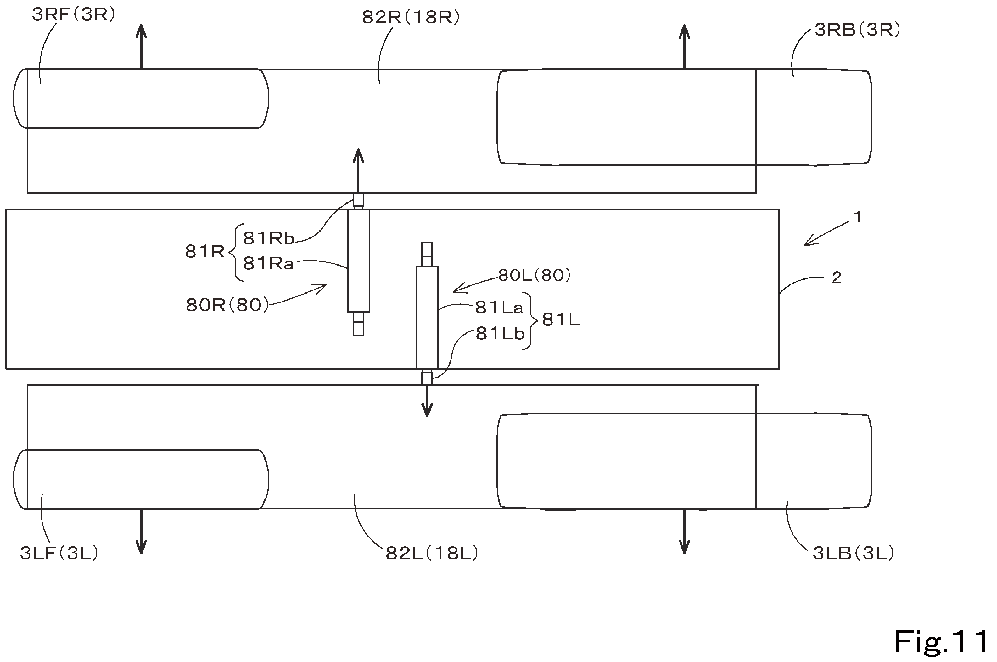

As illustrated in FIG. 7, the working vehicle 1 includes a distance changing mechanism 80. The distance changing mechanism 80 changes the distance between the left traveling device 3L and the right traveling device 3R. As illustrated in FIG. 5 and FIG. 11, the distance changing mechanism 80 includes: a left changing mechanism 80L to change the position of the left traveling device 3L in the left-right direction; and a right changing mechanism 80R to change the position of the right traveling device 3R in the left-right direction. Note that FIG. 11 is a simplified figure of FIG. 5.

As illustrated in FIG. 5 and FIG. 11, the left changing mechanism 80L includes a left cylinder 81L to move the left traveling device 3L leftward or rightward. The left cylinder 81L moves the left front wheel 3LF and the left rear wheel 3LB leftward or rightward. The left front wheel 3LF and the left rear wheel 3LB are connected by a left coupler 82L. Thus, the left cylinder 81L can move the left front wheel 3LF and the left rear wheel 3LB integrally leftward or rightward by moving the left coupler 82L leftward or rightward.

As illustrated in FIG. 5 and FIG. 11, the right changing mechanism 80R includes a right cylinder 81R to move the right traveling device 3R leftward or rightward. The right cylinder 81R moves the right front wheel 3RF and the right rear wheel 3RB leftward or rightward. The right front wheel 3RF and the right rear wheel 3RB are connected by a right coupler 82R. Thus, the right cylinder 81R can move the right front wheel 3RF and the right rear wheel 3RB integrally leftward or rightward by moving the right coupler 82R leftward or rightward.

The lower end of the left coupler 82L is at a position higher than the lower end of the left traveling device 3L. The lower end of the right coupler 82R is at a position higher than the lower end of the right traveling device 3R. Thus, unlike the left traveling device 3L and the right traveling device 3R, the left coupler 82L and the right coupler 82R are not in contact with the ground. The left coupler 82L and the right coupler 82R are located at a predetermined height to prevent contact with a ridge, a crop, or the like.

In the case of the present example embodiment, the left coupler 82L is the left frame 18L of the frame structure 18. The right coupler 82R is the right frame 18R of the frame structure 18. The left front wheel 3LF is rotatably attached to the first left frame 19L (see FIG. 9) of the left frame 18L via the above-described first drive unit 41 and the like. The left rear wheel 3LB is attached to the first left frame 19L of the left frame 18L via the above-described third drive unit 43 and the like such that the left rear wheel 3LB is rotatable during travel.

The right front wheel 3RF is rotatably attached to the first right frame 21R (see FIG. 9) of the right frame 18R via the above-described second drive unit 42 and the like. The right rear wheel 3RB is attached to the first right frame 21R of the right frame 18R via the above-described fourth drive unit 44 and the like such that the right rear wheel 3RB is rotatable during travel.

Thus, the left front wheel 3LF and the left rear wheel 3LB (that is, the left traveling device 3L) can be moved with the left frame 18L in the left-right direction. Also, the right front wheel 3RF and the right rear wheel 3RB (that is, the right traveling device 3R) can be moved with the right frame 18R in the left-right direction.

The right cylinder 81R and the left cylinder 81L each include a hydraulic cylinder. The hydraulic cylinders included in the right cylinder 81R and the left cylinder 81L are actuated (extended and retracted) by the hydraulic fluid supplied from a hydraulic pump driven by the above-described working motor 6.

As illustrated in FIG. 5 and FIG. 11, the left cylinder 81L includes a cylinder tube 81La attached to the vehicle body 2, and a rod 81Lb which projects from the cylinder tube 81La and extends leftward. The left coupler 82L is connected to the distal end of the rod 81Lb of the left cylinder 81L. When the rod 81Lb of the left cylinder 81L is extended leftward, the left coupler 82L is moved leftward, and the left front wheel 3LF and the left rear wheel 3LB are integrally moved leftward. When the rod 81Lb of the left cylinder 81L is retracted rightward, the left coupler 82L is moved rightward, and the left front wheel 3LF and the left rear wheel 3LB are integrally moved rightward.

As illustrated in FIG. 5 and FIG. 11, the right cylinder 81R includes a cylinder tube 81Ra attached to the vehicle body 2, and a rod 81Rb which projects from the cylinder tube 81Ra and extends rightward. The right coupler 82R is connected to the distal end of the rod 81Rb of the right cylinder 81R. When the rod 81Rb of the right cylinder 81R is extended rightward, the right coupler 82R is moved rightward, and the right front wheel 3RF and the right rear wheel 3RB are integrally moved rightward. When the rod 81Rb of the right cylinder 81R is retracted leftward, the right coupler 82R is moved leftward, and the right front wheel 3RF and the right rear wheel 3RB are integrally moved leftward.

As described above, the positions of the left front wheel 3LF and the left rear wheel 3LB (that is, the left traveling device 3L) in the left-right direction can be changed by actuating (extending or retracting) the left cylinder 81L. Also, the positions of the right front wheel 3RF and the right rear wheel 3RB (that is, the right traveling device 3R) in the left-right direction can be changed by actuating (extending or retracting) the right cylinder 81R. Therefore, the distance between the left traveling device 3L and the right traveling device 3R can be changed by actuating one or both of the left cylinder 81L and the right cylinder 81R.

When the distance between the left traveling device 3L and the right traveling device 3R is changed, the respective rods of the left cylinder 81L and the right cylinder 81R are preferably moved (extended or retracted) by the same distance in opposite directions to each other. However, when the distance between the left traveling device 3L and the right traveling device 3R is changed, the respective rods of the left cylinder 81L and the right cylinder 81R may be moved by different distances in opposite directions to each other, or the respective rods of the left cylinder 81L and the right cylinder 81R may be moved by different distances in the same direction.

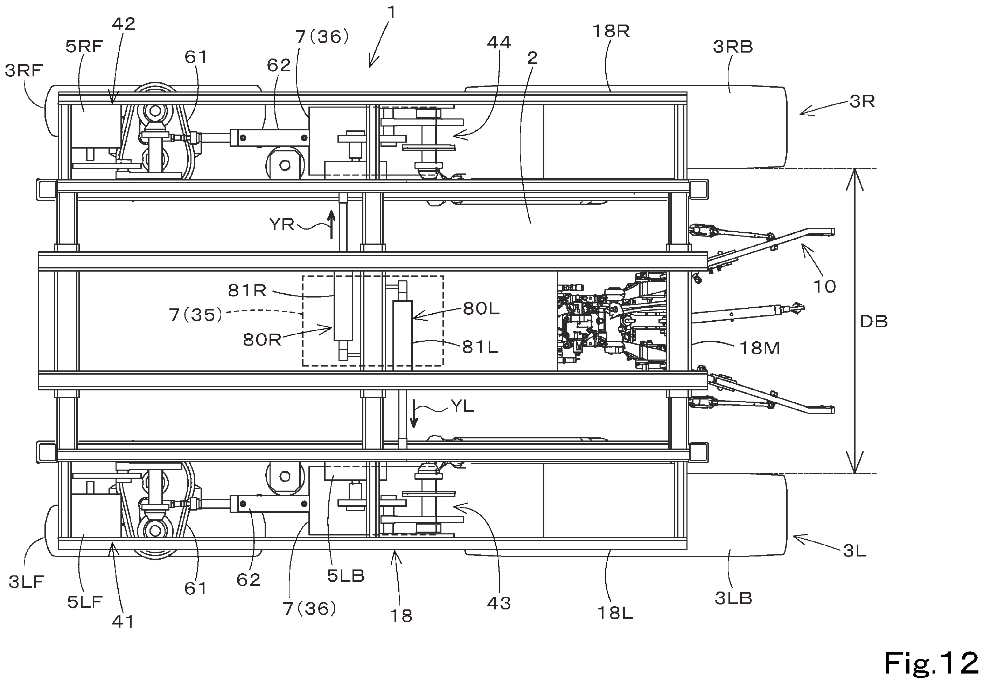

FIG. 5 and FIG. 11 illustrate a state where the rods of the left cylinder 81L and the right cylinder 81R are retracted. In this state, the distance DB (see FIG. 5) between the left traveling device 3L and the right traveling device 3R is short. In this state, the left traveling device 3L (the left front wheel 3LF and the left rear wheel 3LB) and the right traveling device 3R (the right front wheel 3RF and the right rear wheel 3RB) are moved in opposite directions to each other (see arrows in FIG. 11) by extending the rods of the left cylinder 81L and the right cylinder 81R (see arrows YL, YR in FIG. 12). Thus, as illustrated in FIG. 12, the distance DB (see FIG. 5) between the left traveling device 3L and the right traveling device 3R can be increased.

The operation of the distance changing mechanism 80 is controlled by the controller 15. As illustrated in FIG. 7, the controller 15 includes a distance changing control unit 15B. The distance changing mechanism 80 changes the distance between the left traveling device 3L and the right traveling device 3R such that the distance between the left traveling device 3L and the right traveling device 3R corresponds to the detection result from the first detector 70. In the case of the present example embodiment, the distance changing control unit 15B changes the distance between the left traveling device 3L and the right traveling device 3R by actuating the distance changing mechanism 80 based on the detection result from the first detector 70 and the second detector 75.

The change operation by the distance changing mechanism 80 is performed by the distance changing control unit 15B controlling the distance changing mechanism 80. Hereinafter, an example of the operation of the distance changing mechanism 80 will be described, and the operation of the distance changing mechanism 80 in the description below is performed by the distance changing control unit 15B controlling the distance changing mechanism 80 based on the detection result from the first detector 70 and/or the second detector 75. That is, the operation of the distance changing mechanism 80 in the description below is controlled by the distance changing control unit 15B.

For example, when the first detector 70 detects the width of a travelable road, the distance changing mechanism 80 changes the distance between the left traveling device 3L and the right traveling device 3R such that the distance between the left traveling device 3L and the right traveling device 3R corresponds to the width of the travelable road. Specifically, when the first detector 70 detects the width of a travelable road, the distance changing mechanism 80 changes the distance between the left traveling device 3L and the right traveling device 3R such that the distance between the left traveling device 3L and the right traveling device 3R becomes the width of the travelable road or greater than the width of the travelable road (that is, becomes equal to or greater than the width of the travelable road).

As a specific example, when the first detector 70 detects the width of a ridge road, the distance changing mechanism 80 changes the distance between the left traveling device 3L and the right traveling device 3R such that the distance between the left traveling device 3L and the right traveling device 3R corresponds to the width of a ridge. Specifically, the distance changing mechanism 80 changes the distance between the left traveling device 3L and the right traveling device 3R such that the detected ridge is located under the traveling device 3 during travel of the vehicle body 2. In other words, the distance changing mechanism 80 changes the distance between the left traveling device 3L and the right traveling device 3R such that the distance between the left traveling device 3L and the right traveling device 3R becomes the width of the ridge or greater than the width of the ridge (that is, becomes equal to or greater than the width of the ridge).

When the first detector 70 detects the width of an obstacle, the distance changing mechanism 80 changes the distance between the left traveling device 3L and the right traveling device 3R such that the detected obstacle is located under the traveling device 3 during travel of the vehicle body 2. In other words, the distance changing mechanism 80 changes the distance between the left traveling device 3L and the right traveling device 3R such that the distance between the left traveling device 3L and the right traveling device 3R becomes the width of the obstacle or greater than the width of the obstacle (that is, becomes equal to or greater than the width of the obstacle).

The distance changing mechanism 80 can actuate the left changing mechanism 80L and the right changing mechanism 80R independently based on the detection result from the first detector 70. In the case of the present example embodiment, the distance changing mechanism 80 can actuate the left changing mechanism 80L and the right changing mechanism 80R independently based on the detection result from the first detector 70 and the detection result from the second detector 75. Thus, the distance changing mechanism 80 can actuate only the left changing mechanism 80L, can actuate only the right changing mechanism 80R, or can actuate both the left changing mechanism 80L and the right changing mechanism 80R.

The distance changing mechanism 80 changes the distance between the left traveling device 3L and the right traveling device 3R by actuating one or both of the left changing mechanism 80L and the right changing mechanism 80R of the distance changing mechanism 80. When the left changing mechanism 80L is actuated, the rod of the left cylinder 81L is extended or retracted, and the position of the left traveling device 3L in the left-right direction is changed. When the right changing mechanism 80R is actuated, the rod of the right cylinder 81R is extended or retracted, and the position of the right traveling device 3R in the left-right direction is changed. The distance between the left traveling device 3L and the right traveling device 3R is changed by changing the position of one or both of the left traveling device 3L and the right traveling device 3R in the left-right direction. Preferably, the distance changing control unit 15B changes the positions of both the left traveling device 3L and the right traveling device 3R in the left-right direction in opposite directions to each other by the same distance.

The second detector 75 can detect the distance between the left traveling device 3L and the right traveling device 3R by detecting the amount of extension or retraction of each of the left changing mechanism 80L and the right changing mechanism 80R. Specifically, the second detector 75 can detect the distance between the left traveling device 3L and the right traveling device 3R by detecting the amount of extension or retraction of the rod of the left cylinder 81L of the left changing mechanism 80L, and the amount of extension or retraction of the rod of the right cylinder 81R of the right changing mechanism 80R.

In this case, the storage unit of the controller 15 pre-stores information on a relationship between the amount of extension or retraction of the rod of the left cylinder 81L and the position of the left traveling device 3L, a relationship between the amount of extension or retraction of the rod of the right cylinder 81R and the position of the right traveling device 3R, and a relationship between "the positions of the left traveling device 3L and the right traveling device 3R" and "the distance between the left traveling device 3L and the right traveling device 3R". The second detector 75 detects the amount of extension or retraction of the rod of each of the left cylinder 81L and the right cylinder 81R, and detects the distance between the left traveling device 3L and the right traveling device 3R based on the detection result and the information stored in the storage unit.

As illustrated in FIG. 7, the working vehicle 1 includes a height changing mechanism 90. The height changing mechanism 90 changes the height of the vehicle body 2 from the ground surface. The height changing mechanism 90 raises and lowers the vehicle body 2 in which the battery 7 is mounted (housed). The height changing mechanism 90 raises and lowers the vehicle body 2 at a position between the left traveling device 3L and the right traveling device 3R in the width direction (left-right direction) of the vehicle body 2. The height changing mechanism 90 changes the height of the vehicle body 2 from the ground surface by raising or lowering the frame structure 18 attached to the vehicle body 2.

As illustrated in FIG. 2, FIG. 3, FIG. 6, and the like, the height changing mechanism 90 includes a raising/lowering cylinder 91. The raising/lowering cylinder 91 raises and lowers the movable frame 32 (the second left frame 20L, the second right frame 22R, and the lateral frame 18M) of the frame structure 18. The vehicle body 2 is raised or lowered by raising or lowering the movable frame 32. Thus, the vehicle body 2 can be raised or lowered by driving the raising/lowering cylinder 91. Thus, the height changing mechanism 90 is a mechanism capable of raising and lowering the vehicle body 2. Hereinafter, the height changing mechanism 90 may be referred to as the "lifting mechanism 90".

The raising/lowering cylinder 91 includes a hydraulic cylinder. The raising/lowering cylinder 91 includes a rod 91a which is extended or retracted in an up-down direction, and a cylinder tube 91b to which a hydraulic fluid for driving the rod 91a is supplied (see FIG. 1 and the like). The distal end of the rod 91a is connected to the frame structure 18. The raising/lowering cylinder 91 includes a left raising/lowering cylinder 91L and a right raising/lowering cylinder 91R. The left raising/lowering cylinder 91L is located leftward of the vehicle body 2. The right raising/lowering cylinder 91R is located rightward of the vehicle body 2.

As illustrated in FIG. 1 and FIG. 6, the rod 91La of the left raising/lowering cylinder 91L is connected to the second left frame 20L of the frame structure 18. Specifically, the rod 91La of the left raising/lowering cylinder 91L is connected to a left plate 99L which is fixed to the second left frame 20L. Thus, the left raising/lowering cylinder 91L can raise and lower the second left frame 20L, which is a movable frame of the left frame 18L, by extension and retraction of the rod 91La.

As illustrated in FIG. 2 and FIG. 6, the rod 91Ra of the right raising/lowering cylinder 91R is connected to the second right frame 22R of the frame structure 18. Specifically, the rod 91Ra of the right raising/lowering cylinder 91R is connected to a right plate 99R which is fixed to the second right frame 22R. Thus, the right raising/lowering cylinder 91R can raise and lower the second right frame 22R, which is a movable frame of the right frame 18R, by extension and retraction of the rod 91Ra.

A cylinder tube 91Lb of the left raising/lowering cylinder 91L is mounted on a bracket (not illustrated) fixed to the first left frame 19L. A cylinder tube 91Rb of the right raising/lowering cylinder 91R is mounted on a bracket (not illustrated) fixed to the first right frame 21R. As illustrated in FIG. 1 and FIG. 2, the lower ends (the lower ends of the cylinder tubes 91Lb and 91Rb) of the raising/lowering cylinders (the left raising/lowering cylinder 91L and the right raising/lowering cylinder 91R) are located at the same or approximately the same height as the height of the vehicle body 2 from the ground surface when the vehicle body 2 is at a height (the later-described first height) located between the left traveling device 3L and the right traveling device 3R.

However, the lower ends of the raising/lowering cylinders (the left raising/lowering cylinder 91L and the right raising/lowering cylinder 91R) may not be located at the same or approximately the same height as the height of the vehicle body 2 from the ground surface when the vehicle body 2 is at a height (the later-described first height) located between the left traveling device 3L and the right traveling device 3R.

In the case of the present example embodiment, the lower ends (the lower ends of the cylinder tubes 91Lb and 91Rb) of the raising/lowering cylinders (the left raising/lowering cylinder 91L and the right raising/lowering cylinder 91R) are located at a height slightly higher than the height HA of the vehicle body 2 from the ground surface when the vehicle body 2 is at a height located between the left traveling device 3L and the right traveling device 3R (see FIG. 1).

When the rod 91La of the left raising/lowering cylinder 91L is extended or retracted, the second left frame 20L is raised or lowered. When the rod 91Ra of the right raising/lowering cylinder 91R is extended or retracted, the second right frame 22R is raised or lowered. Thus, the frame structure 18 can be raised or lowered with the extension or retraction of the rod 91a of the raising/lowering cylinder 91 (the left raising/lowering cylinder 91L and the right raising/lowering cylinder 91R). The vehicle body 2 is attached to the frame structure 18, and thus the vehicle body 2 can be raised or lowered with the extension or retraction of the rod 91a of the raising/lowering cylinder 91. The height of the vehicle body 2 from the ground surface can be changed by raising or lowering the vehicle body 2.

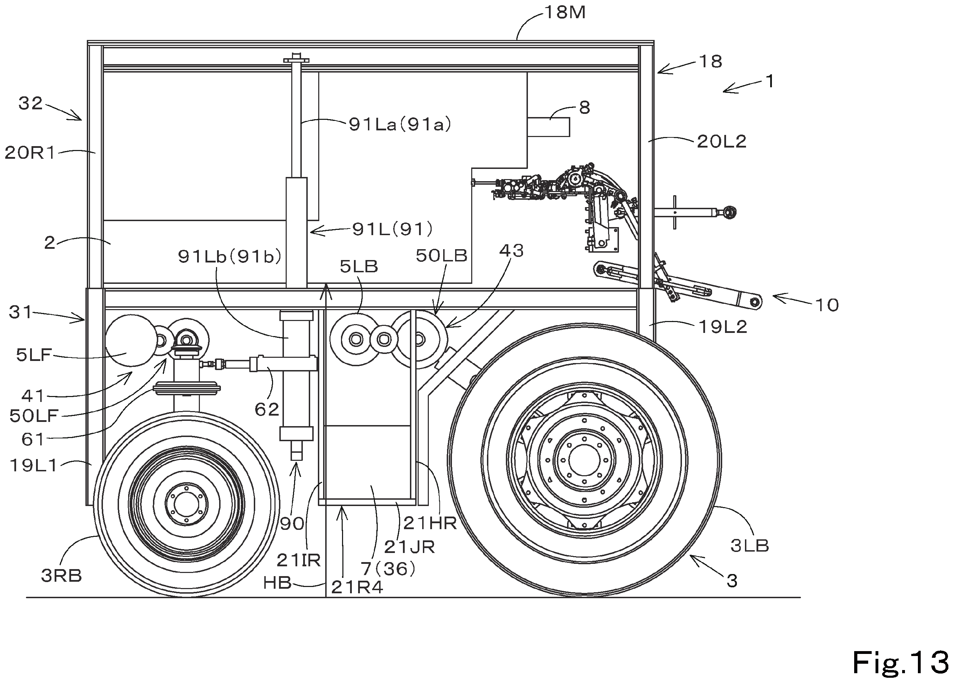

FIG. 13, FIG. 14, and FIG. 15 illustrate a state where the vehicle body 2 is raised by extending the rod 91a of the raising/lowering cylinder 91. The mount 10 provided in the vehicle body 2 is also raised with rise of the vehicle body 2. Thus, the working device attached to the mount 10 can be listed by raising the vehicle body 2.

The operation of the height changing mechanism 90 is controlled by the controller 15. As illustrated in FIG. 7, the controller 15 includes a height changing control unit 15C. The height changing control unit 15C transmits a control signal to the height changing mechanism 90 by executing a program stored in the storage unit by the arithmetic unit of the controller 15. The height changing mechanism 90 is driven based on the control signal transmitted from the height changing control unit 15C. That is, the height changing mechanism 90 changes the height of the vehicle body 2 by being driven based on the control by the controller 15.

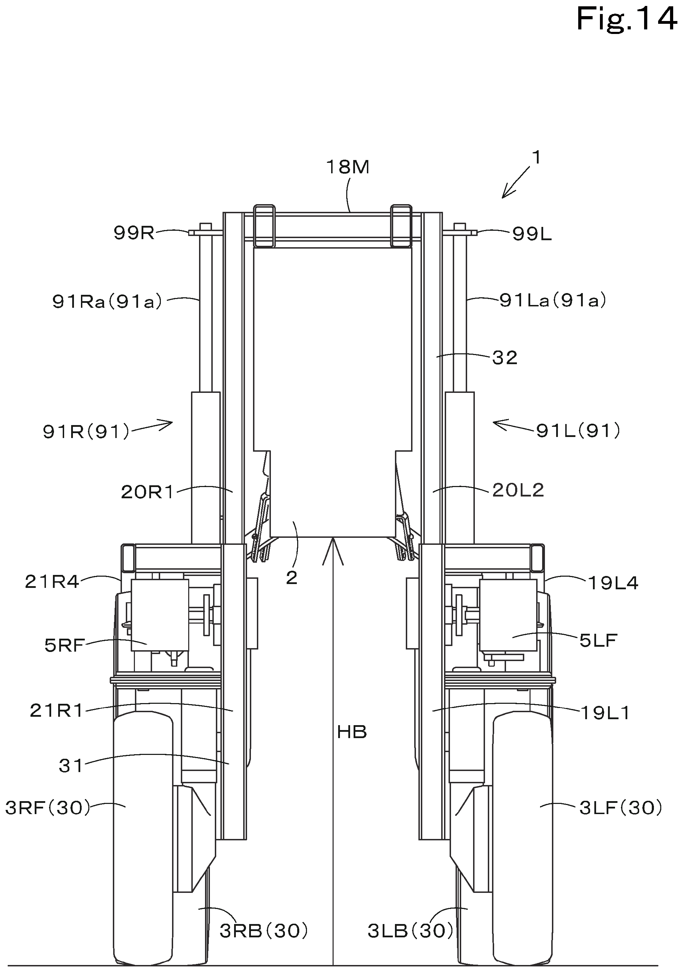

The height changing mechanism 90 can change the height of the vehicle body 2 to any height in a preset height range. Specifically, the height changing mechanism 90 can change the height of the vehicle body 2 to any height between a first height HA (see FIG. 1 and FIG. 3) and a second height HB (see FIG. 13 and FIG. 14) higher than the first height HA. That is, the preset height range is the range between the first height HA and the second height HB. In this example embodiment, the height of the vehicle body 2 with the shortest rod of the raising/lowering cylinder 91 is the first height HA, and the height of the vehicle body 2 with the longest rod of the raising/lowering cylinder 91 is the second height HB.

The first height HA is the lower limit (lower limit height) of the height of the vehicle body 2, which is changeable by the height changing mechanism 90. The second height HB is the upper limit (upper limit height) of the height of the vehicle body 2, which is changeable by the height changing mechanism 90. The height changing mechanism 90 can change the height of the vehicle body 2 to the first height HA as the lower limit height, the second height HB as the upper limit height, and any height (intermediate height) between the upper limit height and the lower limit height.

The height changing mechanism 90 can change the height of the vehicle body 2 in response to designation of the height by the manual operator 101 (see FIG. 7). The manual operator 101 is a device capable of performing an operation of designating the height of the vehicle body 2. The manual operator 101 is a device (external equipment) outside the working vehicle 1, and is configured to communicate with the controller 15 in a wireless or wired manner. The manual operator 101 is a portable device, such as a remote control device, a tablet, a smartphone, and a PDA.

The manual operator 101 includes an input unit to receive a designated height of the vehicle body 2. The input unit is, e.g., a push-button, a rotary dial, and a touch panel. When an operator inputs the height to be designated via the input unit of the manual operator 101, the designated input height is transmitted to the controller 15. The controller 15 transmits a control signal to drive the raising/lowering cylinder 91 of the height changing mechanism 90 such that the height of the vehicle body 2 is set to the designated height. Thus, the height of the vehicle body 2 is changed to the height designated by the manual operator 101.

The height changing mechanism 90 can change the height of the vehicle body 2 according to the height of the crop planted in the ground on which the working vehicle 1 travels. In this case, the height of a crop planted in the ground can be detected by the above-described first detector 70. The height of the crop detected by the first detector 70 is transmitted to the controller 15. The controller 15 transmits a control signal to drive the raising/lowering cylinder 91 of the height changing mechanism 90 such that the height of the vehicle body 2 is made higher than the height of the crop. Thus, the height changing mechanism 90 can change the height of the vehicle body 2 according to the height of the crop detected by the first detector 70.

As described above, the vehicle body 2 is located between the left traveling device 3L and the right traveling device 3R. The height changing mechanism 90 changes the height of the vehicle body 2 by raising or lowering the vehicle body 2 between the left traveling device 3L and the right traveling device 3R. In other words, the vehicle body 2 is moved in the up-down direction through the space between the left traveling device 3L and the right traveling device 3R.

The working vehicle 1 includes a plurality of batteries to store electric power to drive the left traveling assembly 25L and the right traveling assembly 25R (specifically, the left traveling device 3L and the right traveling device 3R). At least one of the plurality of batteries is located in either the left traveling assembly 25L or the right traveling assembly 25R. The plurality of batteries include a first battery 35 to be used during travel or during work and a second battery 36 to be used during travel or during work. Hereinafter, the first battery 35 and the second battery 36 will be described with reference to the drawings.

As illustrated in FIG. 1 to FIG. 5 and FIG. 16, the working vehicle 1 includes the first battery 35 to be used during travel or during work and the second battery 36 to be used during travel or during work. In FIG. 16, hatching is applied to the second battery 36 to clarify the position of the second battery 36. FIG. 16 is a view for explaining the arrangement of the first battery 35 and the second battery 36, and components unrelated to the content of explanation are omitted.

In the case of the present example embodiment, the first battery 35 stores the electric power supplied to a motor that generates the power required during travel or during work. The motor that generates power required during travel is the above-mentioned traveling motor 5. The motor that generates power required during work is the above-mentioned working motor 6. The first battery 35 is a battery 7 that stores the electric power supplied to the traveling motor 5 or the working motor 6.

The second battery 36 has the same function as the first battery 35. In the case of the present example embodiment, the first battery 35 is the battery 7 that stores the electric power supplied to the motor that generates the power required during travel or during work, and thus the second battery 36 is also the battery 7 that stores the electric power supplied to the motor that generates the power required during travel or during work.

For example, when the first battery 35 is the battery 7 that stores the electric power supplied to the traveling motor 5, the second battery 36 is also the battery 7 that stores the electric power supplied to the traveling motor 5. When the first battery 35 is the battery 7 that stores the electric power supplied to the working motor 6, the second battery 36 is also the battery 7 that stores the electric power supplied to the working motor 6. When the first battery 35 is the battery 7 that stores the electric power supplied to the traveling motor 5 and the working motor 6, the second battery 36 is also the battery 7 that stores the electric power supplied to the traveling motor 5 and the working motor 6.

The first battery 35 and the second battery 36 are pieces of equipment to be used during travel or during work of the working vehicle 1, and exhibit the same function during travel or during work. The first battery 35 and the second battery 36 may be different in shape and size.

The first battery 35 and the second battery 36 have the same function and have the same structure or operating principle to exhibit the function. Therefore, the first battery 35 and the second battery 36 have the same structure or operating principle to exhibit the function of storing electricity.

As an example, when the first battery 35 is a lithium-ion battery, the second battery 36 is also a lithium-ion battery. As a specific example, when the first battery 35 is a lithium-ion battery, the second battery 36 does not include a lead-acid battery. This is because the lead-acid battery stores electricity based on the structure or operating principle different from that of the lithium-ion battery.

As seen from the above example, it can also be said that the second battery 36 is a piece of equipment which is a divided portion of the first battery 35. In other words, it can also be said that the first battery 35 which is originally one battery (or a group of batteries) is divided into the first battery 35 and the second battery 36. That is, it can be said that the first battery 35 which is originally one battery is divided into two or more batteries (the first battery 35 and the second battery 36).

As illustrated in FIG. 1 to FIG. 5 and FIG. 16, the first battery 35 is located in the vehicle body 2. Specifically, the first battery 35 is housed in the internal space of the vehicle body 2. The second battery 36 is located in at least one of the left traveling assembly 25L or the right traveling assembly 25R. In other words, the second battery 36 may be located in each of the left traveling assembly 25L and the right traveling assembly 25R, or may be located only in either the left traveling assembly 25L or the right traveling assembly 25R.

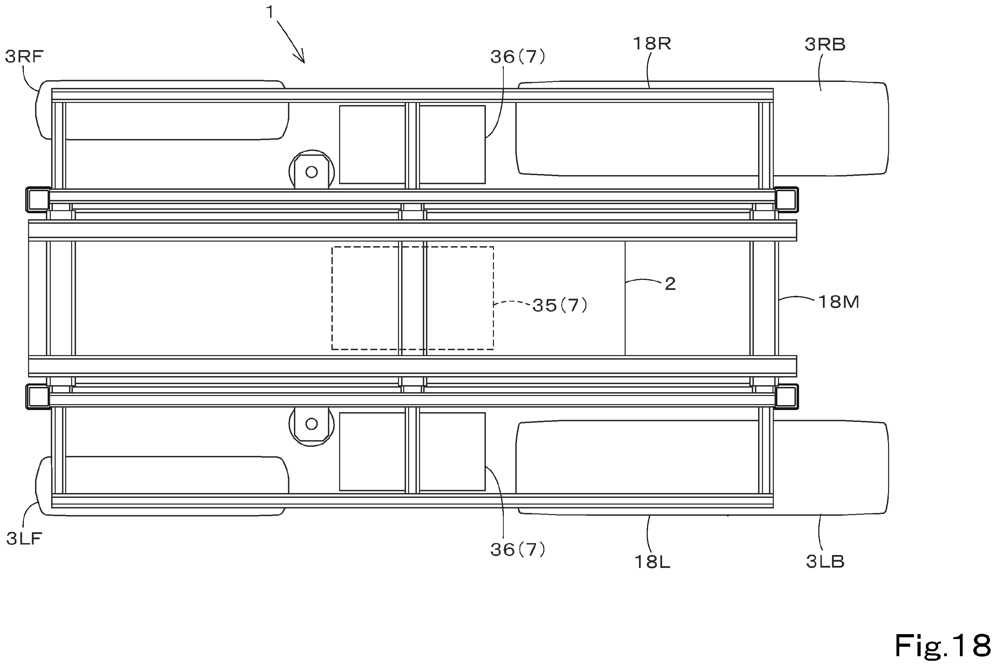

As illustrated in FIG. 1 and FIG. 18, the second battery 36 in the left traveling assembly 25L is located between the left front wheel 3LF and the left rear wheel 3LB. As illustrated in FIG. 2 and FIG. 18, the second battery 36 in the right traveling assembly 25R is located between the right front wheel 3RF and the right rear wheel 3RB. Since the second battery 36 is located in at least one of the left traveling assembly 25L or the right traveling assembly 25R, the second battery 36 is located in at least one of a space between the left front wheel 3LF and the left rear wheel 3LB or a space between the right front wheel 3RF and the right rear wheel. Preferably, the second battery 36 is located in each of the space between the left front wheel 3LF and the left rear wheel 3LB and the space between the right front wheel 3RF and the right rear wheel 3RB.

As illustrated in FIG. 1 and FIG. 2, the second battery 36 is located below the traveling motor 5. The second battery 36 and the traveling motor 5 are each located sideward (leftward or rightward) of the vehicle body 2, and overlap each other in the up-down direction on the side of the vehicle body 2. The second battery 36 is located forward of the fender 55L or 55R on the side of the vehicle body 2. The second battery 36 is located rearward of the raising/lowering cylinder 91 on the side of the vehicle body 2.

As described above, in the working vehicle 1, a plurality of batteries (the first battery 35 and the second battery 36) having the same function are located and distributed over the vehicle body 2 and the left traveling assembly 25L and/or the right traveling assembly 25R. Thus, the weight of the vehicle body 2 can be reduced. Therefore, it is possible to prevent concentration of the weight of the batteries (the first battery 35 and the second battery 36) having the same function on the vehicle body 2.

In the case of the present example embodiment illustrated in FIG. 16, the second battery 36 is located in each of the left traveling assembly 25L and the right traveling assembly 25R. Thus, the batteries (the first battery 35 and the second battery 36) having the same function are located and distributed over three sections: the vehicle body 2, the left traveling assembly 25L, and the right traveling assembly 25R. Thus, the weight balance (particularly, the weight balance in the left-right direction) of the working vehicle 1 can be improved.

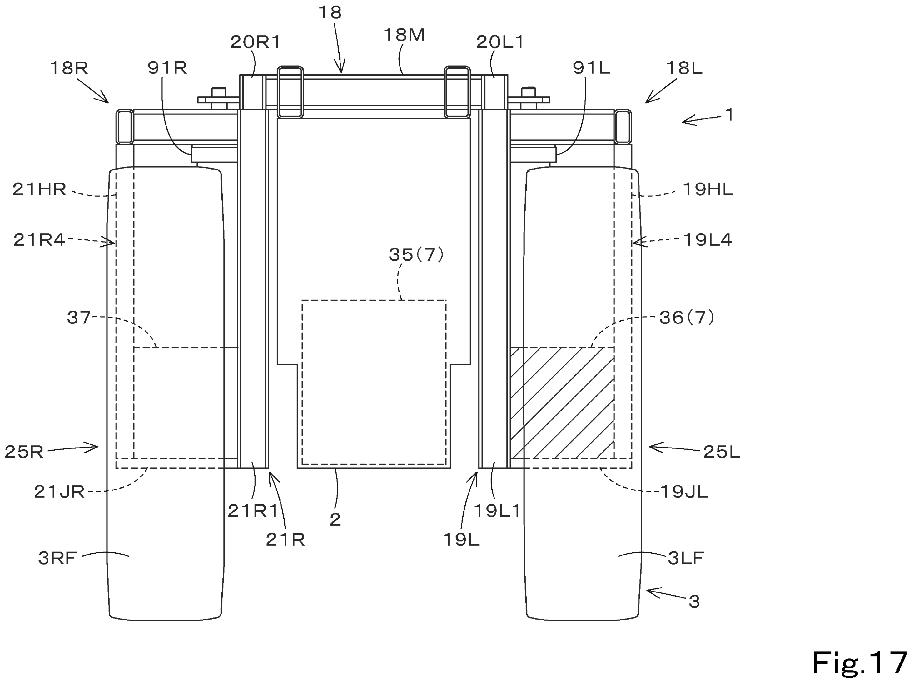

In the case of the present example embodiment illustrated in FIG. 17, the second battery 36 is located only in either the left traveling assembly 25L or the right traveling assembly 25R. Specifically, the second battery 36 is located only in the left traveling assembly 25L among the left traveling assembly 25L and the right traveling assembly 25R. In this case, a piece of equipment 37 different from the batteries (the first battery 35 and the second battery 36) is preferably located in the right traveling assembly 25R. The weight balance in the left-right direction can be made appropriate by locating the piece of equipment 37 different from the batteries in the right traveling assembly 25R. Although not illustrated, the second battery 36 may be located only in the right traveling assembly 25R among the left traveling assembly 25L and the right traveling assembly 25R, and the piece of equipment 37 may be located in the left traveling assembly 25L.

In this manner, when the second battery 36 is located only in one traveling assembly (for example, the left traveling assembly 25L) among the left traveling assembly 25L and the right traveling assembly 25R, the piece of equipment 37 different from the batteries (the first battery 35 and the second battery 36) is preferably located in the other traveling assembly (for example, the right traveling assembly 25R).

For example, when the second battery 36 is located only in one traveling assembly among the left traveling assembly 25L and the right traveling assembly 25R, as the piece of equipment 37, one or more pieces of equipment may be located in the other traveling assembly, the one or more pieces of equipment being selected from the traveling motor 5, the working motor 6, an engine, a fuel cell, a hydraulic pump, a hydraulic fluid tank, a spreader tank, a hydrogen tank, and the like.

The first battery 35 located in the vehicle body 2, and the second battery 36 located in the left traveling assembly 25L and/or the right traveling assembly 25R may have the same weight or may have different weights. In a case of different weights, the weight of the first battery 35 located in the vehicle body 2 may be heavier or lighter than the weight of the second battery 36 located in the left traveling assembly 25L and/or the right traveling assembly 25R.

For example, when the first battery 35 is located in the vehicle body 2, and the second battery 36 is located in each of the left traveling assembly 25L and the right traveling assembly 25R, the second battery 36 located in the left traveling assembly 25L and the second battery 36 located in the right traveling assembly 25R may have the same weight. Also, the first battery 35 located in the vehicle body 2, the second battery 36 located in the left traveling assembly 25L, and the second battery 36 located in the right traveling assembly 25R may have the same weight. Alternatively, the weight of the first battery 35 located in the vehicle body 2 can be the total of the weight of the second battery 36 located in the left traveling assembly 25L and the weight of the second battery 36 located in the right traveling assembly 25R. The second battery 36 located in the left traveling assembly 25L and the second battery 36 located in the right traveling assembly 25R may have the same size (the height, width, and depth are the same).

When the second battery 36 is located only in one traveling assembly (for example, the left traveling assembly 25L), and the piece of equipment 37 is located in the other traveling assembly (for example, the right traveling assembly 25R), the weight of the piece of equipment 37 is preferably the same as or close to the weight of the second battery 36. The second battery 36 and the piece of equipment 37 preferably have the same size (the height, width, and depth are the same).

As illustrated in FIG. 1 and FIG. 16, the second battery 36 in the left traveling assembly 25L is located in the left frame 18L of the left traveling assembly 25L. Specifically, the second battery 36 in the left traveling assembly 25L is located in the first left frame 19L. Specifically, the second battery 36 located in the left traveling assembly 25L is supported by the left equipment supporter 19L4 of the first left frame 19L. More specifically, the second battery 36 located in the left traveling assembly 25L is supported on the support plate 19JL of the left equipment supporter 19L4.

As illustrated in FIG. 2 and FIG. 16, the second battery 36 in the right traveling assembly 25R is located in the right frame 18R of the right traveling assembly 25R. Specifically, the second battery 36 in the right traveling assembly 25R is located in the first right frame 21R. Specifically, the second battery 36 located in the right traveling assembly 25R is supported by the right equipment supporter 21R4 of the first right frame 21R. More specifically, the second battery 36 located in the right traveling assembly 25R is supported on the support plate 21JR of the right equipment supporter 21R4.

The configuration of the left equipment supporter 19L4 and the right equipment supporter 21R4 is as illustrated in FIG. 8 to FIG. 10. However, the configuration of the left equipment supporter 19L4 and the right equipment supporter 21R4 is not limited to the configuration illustrated in FIG. 8 to FIG. 10. It is only necessary for the left equipment supporter 19L4 to have a configuration that allows the second battery 36 (or the first battery 35) to be located (supported) on the first left frame 19L. It is only necessary for the right equipment supporter 21R4 to have a configuration that allows the second battery 36 (or the first battery 35) to be located (supported) on the first right frame 21R.

Note that when the second battery 36 is located only in either the left traveling assembly 25L or the right traveling assembly 25R, the equipment supporter not provided with the second battery 36 may be omitted. For example, when the second battery 36 is located only in the left traveling assembly 25L, the right equipment supporter 21R4 not provided with the second battery 36 may be omitted. When the second battery 36 is located only in the right traveling assembly 25R, the left equipment supporter 19L4 not provided with the second battery 36 may be omitted.

As described above, the first left frame 19L and the first right frame 21R are each a fixed frame 31 not movable in the up-down direction. Thus, the frames (the first left frame 19L and the first right frame 21R) included in the left traveling assembly 25L and the right traveling assembly 25R are each a frame (fixed frame 31) not movable in the up-down direction. Therefore, the second battery 36 is located in a frame not movable (not raised or lowered) in the up-down direction.

As described above, the left traveling device 3L is movable in the left-right direction with the left frame 18L including the first left frame 19L. Thus, the left traveling assembly 25L is movable in the left-right direction. Also, the right traveling device 3R is movable in the left-right direction with the right frame 18R including the first right frame 21R. Thus, the right traveling assembly 25R is movable in the left-right direction. Therefore, the second battery 36 is located in a frame (the first left frame 19L or the first right frame 21R) movable in the left-right direction.

As described above, in the working vehicle 1, a portion (the first battery 35) of the plurality of batteries (the first battery 35 and the second battery 36) having the same function is located in the vehicle body 2 which can be raised and lowered, and the remaining portion (the second battery 36) is located in a frame (the first left frame 19L or the first right frame 21R) which is not raised or lowered. In addition, in the working vehicle 1, a portion (the first battery 35) of the plurality of batteries (the first battery 35 and the second battery 36) having the same function is located in the vehicle body 2 which is not movable in the left-right direction, and the remaining portion (the second battery 36) is located in a frame (the first left frame 19L or the first right frame 21R) which is movable in the left-right direction.

The second battery 36 is preferably located in at least one of a lower portion of the left traveling assembly 25L or a lower portion of the right traveling assembly 25R. In the case of the present example embodiment, as illustrated in FIG. 16, the second battery 36 is located in each of the lower portion of the left traveling assembly 25L and the lower portion of the right traveling assembly 25R. The second battery 36 is located in the lower portion of the left traveling assembly 25L and/or the lower portion of the right traveling assembly 25R, and thus the center of gravity position of the working vehicle 1 can be lowered. Thus, the working vehicle 1 can be stabilized during travel or during work.

In the case of the present example embodiment, as illustrated in FIG. 16, the second battery 36 is located below a center C1 of the first left frame 19L or the first right frame 21R in the up-down direction. A center C4 of the second battery 36 in the up-down direction is located below a center C2 of the left traveling assembly 25L or the right traveling assembly 25R in the up-down direction. The center C4 of the second battery 36 in the up-down direction is located below a center C3 of the rear wheels (the left rear wheel 3LB and the right rear wheel 3RB) in the up-down direction. The upper end of the second battery 36 is located above the center C3 of the rear wheels (the left rear wheel 3LB and the right rear wheel 3RB) in the up-down direction. The upper end of the second battery 36 is located above the center C2 of the left traveling assembly 25L or the right traveling assembly 25R in the up-down direction. As illustrated in FIG. 1 and FIG. 2, the upper end of the second battery 36 is located below the upper end of the front wheels (the left front wheel 3LF and the right front wheel 3RF).

In the case of the present example embodiment, as illustrated in FIG. 1, FIG. 2, and FIG. 16, the height of the lower end of the second battery 36 is the same or approximately the same as the height of the lower end of the vehicle body 2. The height of the upper end of the second battery 36 is lower than the height of the upper end of the first battery 35. However, the height of the lower end of the second battery 36 may be lower or higher than the height of the lower end of the vehicle body 2. The height of the upper end of the second battery 36 may be the same or approximately the same as the height of the upper end of the first battery 35, or may be higher than the height of the upper end of the first battery 35.

The first battery 35 is preferably located in a lower portion of the vehicle body 2. In the case of the present example embodiment, as illustrated in FIG. 16, a center C6 of the first battery 35 in the up-down direction is located below a center C5 of the vehicle body 2 in the up-down direction. The upper end of the first battery 35 is located below the center C5 of the vehicle body 2 in the up-down direction. However, the upper end of the first battery 35 may be located above the center C5 of the vehicle body 2 in the up-down direction. The first battery 35 may be located at a position (such as an upper portion) other than the lower portion of the vehicle body 2. In FIG. 16, the upper end of the first battery 35 is located below the center C1 of the first left frame 19L or the first right frame 21R in the up-down direction, but may be located above the center C1.

As illustrated in FIG. 16, the center of gravity position of the vehicle body 2 can be lowered by locating the first battery 35 in the lower portion of the vehicle body 2. Thus, the working vehicle 1 can be stabilized during travel or during work.

In the working vehicle 1, the batteries (the first battery 35 and the second battery 36) having the same function are located and distributed over not only the vehicle body 2, but also the left traveling assembly 25L and/or the right traveling assembly 25R. Thus, the first battery 35 located in the vehicle body 2 can be miniaturized, and the height of the first battery 35 can be controlled to be low. This also allows the center of gravity position of the vehicle body 2 to be lowered.

As illustrated in FIG. 16, in a state (state of the first height) where the vehicle body 2 is lowered, the position of the first battery 35 in the up-down direction and the position of the second battery 36 in the up-down direction overlap at least in part. Thus, the center of gravity positions of the vehicle body 2, the left traveling assembly 25L, and the right traveling assembly 25R in the up-down direction can be set to close positions (heights). Thus, the weight balance of the working vehicle 1 in the up-down direction becomes favorable.

As illustrated in FIG. 18, the position of the first battery 35 in the front-rear direction and the position of the second battery 36 in the front-rear direction overlap at least in part. In this case, the center of gravity positions of the vehicle body 2, the left traveling assembly 25L, and the right traveling assembly 25R in the front-rear direction can be set to close positions. Thus, the weight balance of the working vehicle 1 in the front-rear direction becomes favorable. However, the position of the first battery 35 in the front-rear direction and the position of the second battery 36 in the front-rear direction may not overlap. That is, the position of the first battery 35 in the front-rear direction may be forward of the position of the second battery 36 in the front-rear direction, or the position of the first battery 35 in the front-rear direction may be rearward of the position of the second battery 36 in the front-rear direction.

Preferably, the position of the first battery 35 in the front-rear direction is the same as the position of the second battery 36 in the front-rear direction. The position of the second battery 36 located in the left traveling assembly 25L in the front-rear direction is preferably the same as the position of the second battery 36 located in the right traveling assembly 25R in the front-rear direction. The weight balance of the working vehicle 1 in the front-rear direction becomes more favorable by locating the first battery 35 and the second battery 36 in this manner.

As illustrated in FIG. 18, the outer ends of the second battery 36 in the left traveling assembly 25L and/or the right traveling assembly 25R are located inward (closer to the vehicle body 2) of the outer ends of the wheels 30. Specifically, the left end of the second battery 36 located in the left traveling assembly 25L is located rightward of the left ends of the left front wheel 3LF and the left rear wheel 3LB. The right end of the second battery 36 located in the right traveling assembly 25R is located leftward of the right ends of the right front wheel 3RF and the right rear wheel 3RB.

The outer ends of the second battery 36 located in the left traveling assembly 25L and/or the right traveling assembly 25R are located inward (closer to the vehicle body 2) of the outer ends of the side frames 18LR. Specifically, the left end of the second battery 36 in the left traveling assembly 25L is located rightward of the left end of the left frame 18L. The right end of the second battery 36 in the right traveling assembly 25R is located leftward of the right end of the right frame 18R.

In this manner, the outer ends of the second battery 36 in the left traveling assembly 25L and/or the right traveling assembly 25R are located inward of the outer ends of the wheels 30 or the side frames 18LR, and thus an increase in the vehicle width of the working vehicle 1 due to the located second battery 36 can be prevented.

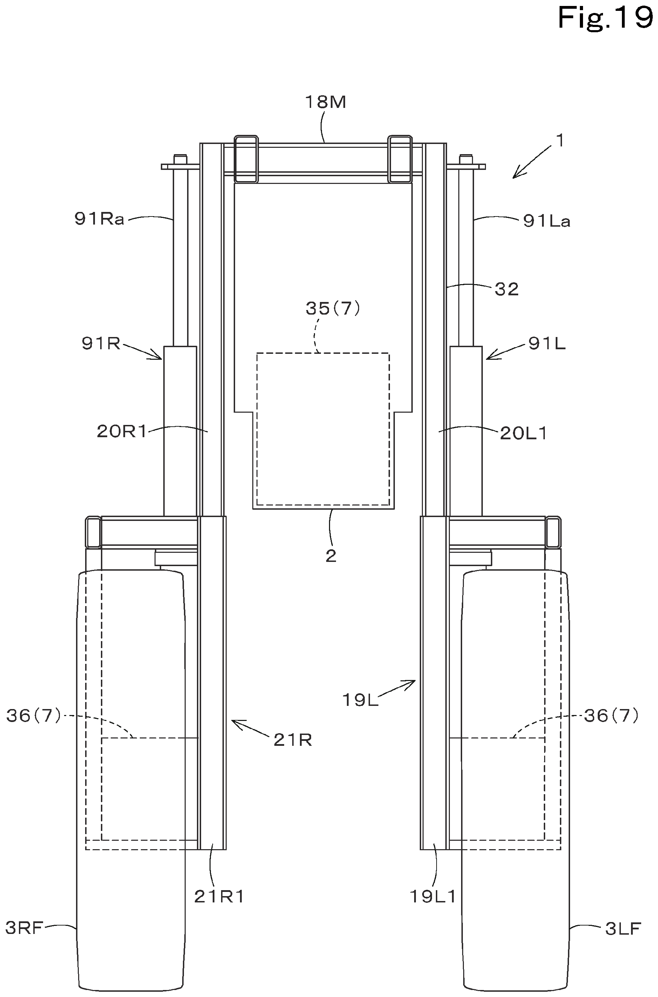

As described above, the vehicle body 2 is raised or lowered by the height changing mechanism (lifting mechanism) 90. FIG. 19 illustrates a state where the vehicle body 2 is raised to the second height by the height changing mechanism (lifting mechanism) 90. Note that FIG. 19 is a view for explaining the arrangement of the first battery 35 and the second battery 36 when the vehicle body 2 is raised, and components unrelated to the content of explanation are omitted.

The height changing mechanism 90 raises or lowers the first battery 35 with the vehicle body 2. In this situation, the second battery 36 is not raised or lowered. In other words, the height changing mechanism 90 raises or lowers only the first battery 35 among the first battery 35 and the second battery 36. Thus, when the vehicle body 2 is raised by the height changing mechanism 90, only the first battery 35 among the first battery 35 and the second battery 36 is raised. Thus, only a portion (the first battery 35) of the plurality of batteries (the first battery 35 and the second battery 36) having the same function is raised.

As illustrated in FIG. 19, in a state (state of the second height) where the vehicle body 2 is raised, the second battery 36 is located below the vehicle body 2 and the first battery 35. In contrast, as illustrated in FIG. 16, in a state (state of the first height) where the vehicle body 2 is lowered, the position of the second battery 36 in the up-down direction overlaps the position of the vehicle body 2 and the first battery 35 in the up-down direction. In this manner, with the vehicle body 2 raised or lowered, a positional relationship between the first battery 35 and the second battery 36 in the up-down direction is changed between an overlapping state (see FIG. 16) in which the positions thereof in the up-down direction overlap, and a non-overlapping state (see FIG. 19).

In this manner, the first battery 35 and the second battery 36 can be spaced apart in the up-down direction by changing the positional relationship between the first battery 35 and the second battery 36 in the up-down direction. Consequently, heat generated from one of the first battery 35 and the second battery 36 can be prevented from having an effect on the other battery.

As described above, in the working vehicle 1, the plurality of batteries (the first battery 35 and the second battery 36) having the same function are located and distributed over the vehicle body 2 and the left traveling assembly 25L and/or the right traveling assembly 25R, and thus the weight of the vehicle body 2 can be reduced. In other words, as compared to when all the plurality of batteries having the same function are located in the vehicle body 2, the weight of the vehicle body 2 can be reduced. Thus, the force required for raising the vehicle body 2 by the height changing mechanism 90 can be reduced.

Thus, the raising/lowering cylinder 91 of the height changing mechanism 90, and the hydraulic pump for supplying a hydraulic fluid to the raising/lowering cylinder 91 can be reduced in size and weight. Since the hydraulic pump is mounted on the vehicle body 2, the weight of the vehicle body 2 can be reduced by reducing the weight of the hydraulic pump. As a result, the weight of the working vehicle 1 can be reduced.

As described above, the second battery 36 is located in the frames (the first left frame 19L and the first right frame 21R) movable in the left-right direction. Thus, the positional relationship between the first battery 35 and the second battery 36 in the left-right direction is changed by moving the frames (the first left frame 19L and the first right frame 21R). Therefore, in the working vehicle 1, not only the positional relationship between the first battery 35 and the second battery 36 in the up-down direction can be changed, but also the positional relationship in the left-right direction can be changed. In other words, the working vehicle 1 allows the first battery 35 and the second battery 36 to be moved in the directions (the up-down direction and the left-right direction) perpendicular to each other. Stated differently, the working vehicle 1 includes the mechanism (the height changing mechanism 90 and the distance changing mechanism 80) that can change the relative positional relationship between the first battery 35 and the second battery 36.

The second battery 36 is located in a frame (the first left frame 19L or the first right frame 21R) movable in the left-right direction, and thus the distance (distance in the left-right direction) between the second battery 36 and the vehicle body 2 can be changed by moving the frame (the first left frame 19L or the first right frame 21R). Thus, the second battery 36 can be located sideward (leftward or rightward) of and apart from the vehicle body 2.

Access to the second battery 36 is facilitated by locating the second battery 36 sideward of and apart from the vehicle body 2, and thus the maintainability of the second battery 36 is improved. When the second battery 36 is located apart from the vehicle body 2, the weight of the working vehicle 1 is widely distributed in the left-right direction, and thus the stability in the left-right direction is improved. Thus, for example, when the vehicle body 2 is raised, overturning of the vehicle body 2 can be reliably prevented.

The first battery 35 and the second battery 36 are pieces of equipment that generate heat, and thus the generated heat can be prevented from concentrating (accumulating) on a local section by locating and distributing the first battery 35 and the second battery 36 over the vehicle body 2 and the left traveling assembly 25L and/or the right traveling assembly 25R. For example, when both the heat-generating first battery 35 and second battery 36 are located in the vehicle body 2, or when the heat-generating first battery 35 and second battery 36 are located as an integrated object in the vehicle body 2, heat may be concentrated on a local section inside the vehicle body 2; however, heat concentration can be reduced by locating and distributing the second battery 36 over not only the vehicle body 2, but also the left traveling assembly 25L and/or the right traveling assembly 25R.

Also, the distance (distance in the left-right direction) between the first battery 35 and the second battery 36 can be changed, and thus the second battery 36 can be located apart from the first battery 35 sideward. Consequently, heat generated from one of the first battery 35 and the second battery 36 can be prevented from having an effect on the other battery.

When the second battery 36 is located in each of the left traveling assembly 25L and the right traveling assembly 25R, the distance (distance in the left-right direction) between the second battery 36 located in the left traveling assembly 25L and the second battery 36 located in the right traveling assembly 25R can be changed. Thus, the weight balance in the left-right direction and the center of gravity position of the working vehicle 1 can be adjusted.

The frame structure 18 (see FIG. 8 and the like) with the second battery 36 located therein has a framework structure in which multiple frame members are combined, and thus favorable ventilation can be secured. Thus, locating the second battery 36 in the frame structure 18 allows the second battery 36 to be cooled (air-cooled) by the air passing through the frame structure 18. However, a configuration can also be used such that a cover is provided to cover the outside of the frame structure 18.

In the case of the working vehicle 1 in the above-described example embodiment, a portion (the first battery 35) of the plurality of batteries is located in the vehicle body 2; however, for the working vehicle 1, an example embodiment may be used in which no battery is located in the vehicle body 2. Hereinafter, the working vehicle 1 in the example embodiment (referred to as the "second example embodiment") in which no battery is located in the vehicle body 2 will be described. In the description of the second example embodiment, the components in common with the working vehicle 1 in the above example embodiment will not be described.

FIG. 20 is a front view illustrating an example of the working vehicle 1 in the second example embodiment. In the working vehicle 1 in the second example embodiment, a plurality of batteries (the first battery 35 and the second battery 36) having the same function are located in the traveling assemblies (the left traveling assembly 25L and the right traveling assembly 25R). Specifically, the first battery 35 is located in the left traveling assembly 25L, and the second battery 36 is located in the right traveling assembly 25R.

No battery is located in the vehicle body 2. Specifically, in the case of the working vehicle 1 in the second example embodiment, the plurality of batteries (the first battery 35 and the second battery 36) are located in the traveling assemblies (the left traveling assembly 25L and the right traveling assembly 25R), and no battery is located in the vehicle body 2.

The first battery 35 stores power to drive the left traveling assembly 25L (specifically, the left traveling device 3L). Since the first battery 35 is located in the left traveling assembly 25L, power to drive the left traveling device 3L is easily supplied from the first battery 35. The second battery 36 stores power to drive the right traveling assembly 25R (specifically, the right traveling device 3R). Since the second battery 36 is located in the right traveling assembly 25R, power to drive the right traveling device 3R is easily supplied from the second battery 36.

In the case of the working vehicle 1 in the second example embodiment, the plurality of batteries (the first battery 35 and the second battery 36) are not located in the vehicle body 2, and thus the weight of the vehicle body 2 can be reduced. Therefore, it is possible to prevent concentration of the weight of the plurality of batteries (the first battery 35 and the second battery 36) on the vehicle body 2. In addition, due to the reduction in the weight of the vehicle body 2, the force required for raising the vehicle body 2 by the height changing mechanism 90 can be reduced.

In the case of the working vehicle 1 in the second example embodiment, the plurality of batteries (the first battery 35 and the second battery 36) are located and distributed over the left traveling assembly 25L and the right traveling assembly 25R, and thus the weight balance (particularly, the weight balance in the left-right direction) of the working vehicle 1 can be improved. In addition, heat generated from the batteries can be prevented from accumulating in the vehicle body 2.

Preferred example embodiments of the present invention provide working vehicles 1 described in the following items.

(Item 1) A working vehicle 1 including a vehicle body 2, a left traveling assembly 25L including a left traveling device 3L located leftward of the vehicle body 2, a right traveling assembly 25R including a right traveling device 3R located rightward of the vehicle body 2, and a plurality of batteries to store electric power to drive the left traveling assembly 25L and the right traveling assembly 25R, wherein at least one of the plurality of batteries is located in the left traveling assembly 25L or the right traveling assembly 25R.

In the working vehicle 1 according to Item 1, the weight balance of the vehicle can be improved. Specifically, at least one of the plurality of batteries is located in the left traveling assembly 25L or the right traveling assembly 25R, and thus concentration of the weight of the batteries on the vehicle body 2 can be prevented, and the weight balance of the working vehicle 1 can be improved.

(Item 2) The working vehicle 1 according to item 1, wherein the plurality of batteries include a first battery 35 to be used during travel or during work and a second battery 36 to be used during travel or during work, the first battery 35 is located in the vehicle body 2, and the second battery 36 has a same function as the first battery 35, and is located in at least one of the left traveling assembly 25L or the right traveling assembly 25R.

In the working vehicle 1 according to Item 1, the first battery 35 and the second battery 36 having the same function are located and distributed over the vehicle body 2 and traveling assembly(assemblies) (at least one of the left traveling assembly 25L or the right traveling assembly 25R), and thus concentration of the weight of the batteries on the vehicle body 2 is prevented, and the weight balance (the weight balance in the left-right direction) of the working vehicle 1 can be favorably improved.

(Item 3) The working vehicle 1 according to item 1, wherein the plurality of batteries include a first battery 35 to be used during travel or during work and a second battery 36 to be used during travel or during work, and the first battery 35 and the second battery 36 have a same function, the first battery 35 is located in the left traveling assembly 25L, and the second battery 36 is located in the right traveling assembly 25R.

In the working vehicle 1 according to Item 3, the first battery 35 and the second battery 36 having the same function are located and distributed over the left traveling assembly 25L and the right traveling assembly 25R, and thus concentration of the weight of the batteries on the vehicle body 2 is prevented, and the weight balance (the weight balance in the left-right direction) of the working vehicle 1 can be more favorably improved.

(Item 4) The working vehicle 1 according to item 3, wherein the plurality of batteries are not located in the vehicle body 2.

In the working vehicle 1 according to Item 4, no battery is located in the vehicle body 2, and thus the weight of the vehicle body 2 can be reduced. Thus, concentration of weight on the vehicle body 2 can be prevented.

(Item 5) The working vehicle 1 according to item 2, wherein the second battery 36 is located in each of the left traveling assembly 25L and the right traveling assembly 25R.

In the working vehicle 1 according to Item 5, the second batteries 36 are located and distributed over the vehicle body 2, the left traveling assembly 25L, and the right traveling assembly 25R, and thus concentration of the weight of the batteries on the vehicle body 2 is prevented, and the weight balance (the weight balance in the left-right direction) of the working vehicle 1 can be favorably improved.

(Item 6) The working vehicle 1 according to item 2, wherein the second battery 36 is located in at least one of a lower portion of the left traveling assembly 25L or a lower portion of the right traveling assembly 25R.

In the working vehicle 1 according to Item 6, the center of gravity position of the working vehicle 1 can be lowered by lowering the center of gravity position of at least one of the left traveling assembly 25L or the right traveling assembly 25R, and thus the travel and work of the working vehicle 1 can be stably performed.

(Item 7) The working vehicle 1 according to item 2, wherein the second battery 36 is located in each of a lower portion of the left traveling assembly 25L and a lower portion of the right traveling assembly 25R.

In the working vehicle 1 according to Item 7, the center of gravity position of the working vehicle 1 can be lowered by lowering the center of gravity positions of the left traveling assembly 25L and the right traveling assembly 25R, and thus the travel and work of the working vehicle 1 can be stably performed.

(Item 8) The working vehicle 1 according to item 2, wherein the left traveling assembly 25L includes a left front wheel 3LF and a left rear wheel 3LB, the right traveling assembly 25R includes a right front wheel 3RF and a right rear wheel 3RB, and the second battery 36 is located in at least one of a space between the left front wheel 3LF and the left rear wheel 3LB or a space between the right front wheel 3RF and the right rear wheel 3RB.

In the working vehicle 1 according to Item 8, the second battery 36 can be located by using the space between the left front wheel 3LF and the left rear wheel 3LB and/or the space between the right front wheel 3RF and the right rear wheel 3RB. Thus, extension of the dimension of the working vehicle 1 in the width direction due to the second battery 36 being provided can be prevented. Since the wheels are located forward and rearward of the second battery 36, collision of foreign materials with the second battery 36 from the front or rear can be prevented by the wheels.

(Item 9) The working vehicle 1 according to item 2, wherein the left traveling assembly 25L includes a left front wheel 3LF and a left rear wheel 3LB, the right traveling assembly 25R includes a right front wheel 3RF and a right rear wheel 3RB, and the second battery 36 is located in each of a space between the left front wheel 3LF and the left rear wheel 3LB and a space between the right front wheel 3RF and the right rear wheel 3RB.

In the working vehicle 1 according to Item 9, the second batteries 36 can be located leftward and rightward of the vehicle body 2 by using the space between the left front wheel 3LF and the left rear wheel 3LB, and the space between the right front wheel 3RF and the right rear wheel 3RB. Thus, multiple second batteries 36 can be located sideward of the vehicle body 2 while preventing extension of the dimension of the working vehicle 1 in the width direction due to the second batteries 36 being provided.

(Item 10) The working vehicle 1 according to any one of items 2 and 5 to 9, further including a lifting mechanism 90 to raise and lower the vehicle body 2, wherein the lifting mechanism 90 is configured to raise and lower the first battery 35 with the vehicle body 2.

In the working vehicle 1 according to Item 10, with the second battery 36 located in at least one of the left traveling assembly 25L or the right traveling assembly 25R, the first battery 35 is raised and lowered with the vehicle body 2, and thus the force required for raising and lowering the vehicle body 2 can be reduced. Thus, the piece of equipment necessary for raising and lowering the vehicle body 2 can be reduced in size and weight.

(Item 11) The working vehicle 1 according to any one of items 1 to 10, further including a motor 5, 6 to generate power required during travel or during work, wherein the first battery 35 and the second battery 36 are batteries 7 to store electric power to be supplied to the motor 5, 6.

In the working vehicle 1 according to Item 11, the batteries 7 which are heavy objects can be located and distributed over the vehicle body 2 and at least one of the left traveling assembly 25L or the right traveling assembly 25R. Thus, concentration of the weight of the batteries as heavy objects on the vehicle body 2 can be prevented, and thus the weight balance of the working vehicle 1 can be favorably improved.

While example embodiments of the present invention have been described above, it is to be understood that the example embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

- 1: working vehicle
- 2: vehicle body
- 3L: left traveling device
- 3LF: left front wheel
- 3LB: left rear wheel
- 3R: right traveling device
- 3RF: right front wheel
- 3RB: right rear wheel
- 5: motor (traveling motor)
- 6: motor (working motor)
- 7: battery
- 25L: left traveling assembly
- 25R: right traveling assembly
- 35: first battery
- 36: second battery
- 90: lifting mechanism

## Claims

1. A working vehicle comprising:
a vehicle body;
a left traveling assembly including a left traveling device located leftward of the vehicle body;
a right traveling assembly including a right traveling device located rightward of the vehicle body; and
a plurality of batteries to store electric power to drive the left traveling assembly and the right traveling assembly; wherein
at least one of the plurality of batteries is located in the left traveling assembly or the right traveling assembly.

2. The working vehicle according to claim 1, wherein
the plurality of batteries include a first battery to be used during travel or during work and a second battery to be used during travel or during work;
the first battery is located in the vehicle body; and
the second battery has a same function as the first battery, and is located in at least one of the left traveling assembly or the right traveling assembly.

3. The working vehicle according to claim 1, wherein
the plurality of batteries include a first battery to be used during travel or during work and a second battery to be used during travel or during work; and
the first battery and the second battery have a same function, the first battery is located in the left traveling assembly, and the second battery is located in the right traveling assembly.

4. The working vehicle according to claim 3, wherein
the plurality of batteries are not located in the vehicle body.

5. The working vehicle according to claim 2, wherein
the second battery is located in each of the left traveling assembly and the right traveling assembly.

6. The working vehicle according to claim 2, wherein
the second battery is located in at least one of a lower portion of the left traveling assembly or a lower portion of the right traveling assembly.

7. The working vehicle according to claim 2, wherein
the second battery is located in each of a lower portion of the left traveling assembly and a lower portion of the right traveling assembly.

8. The working vehicle according to claim 2, wherein
the left traveling assembly includes a left front wheel and a left rear wheel;
the right traveling assembly includes a right front wheel and a right rear wheel; and
the second battery is located in at least one of a space between the left front wheel and the left rear wheel or a space between the right front wheel and the right rear wheel.

9. The working vehicle according to claim 2, wherein
the left traveling assembly includes a left front wheel and a left rear wheel;
the right traveling assembly includes a right front wheel and a right rear wheel; and
the second battery is located in each of a space between the left front wheel and the left rear wheel and a space between the right front wheel and the right rear wheel.

10. The working vehicle according to claim 2, further comprising:
a lifting mechanism to raise and lower the vehicle body; wherein
the lifting mechanism is configured to raise and lower the first battery with the vehicle body.

11. The working vehicle according to any one of claims 1 to 10, further comprising:
a motor to generate power required during travel or during work; wherein
the first battery and the second battery are batteries to store electric power to be supplied to the motor.
